# EUROPEAN PATENT SPECIFICATION

(11) **EP 3 725 840 B1**
(45) Date of publication and mention of the grant of the patent: **07.08.2024**
(21) Application number: 18888101.5
(22) Date of filing: 13.09.2018
(51) Int. Cl.: C08L 23/08, B60C 1/00, B62D 55/24, B65G 15/34, C08F 210/02, C08F 212/08, C08F 236/06, C08L 25/08, C08L 101/00, F16F 15/08, F16L 11/08, C08L 57/02, C08F 236/08

(54) **RUBBER COMPOSITION, TIRE, CONVEYOR BELT, RUBBER CRAWLER, ANTI-VIBRATION DEVICE, SEISMIC ISOLATION DEVICE, AND HOSE**
KAUTSCHUKZUSAMMENSETZUNG, REIFEN, FÖRDERBAND, GUMMIRAUPE, SCHWINGUNGSDÄMPFUNGSVORRICHTUNG, VORRICHTUNG ZUR SEISMISCHEN ISOLATION UND SCHLAUCH
COMPOSITION DE CAOUTCHOUC, PNEUMATIQUE, COURROIE TRANSPORTEUSE, CHENILLE EN CAOUTCHOUC, DISPOSITIF D'AMORTISSEMENT DES VIBRATIONS, ISOLATEUR SISMIQUE, ET TUYAU SOUPLE

(30) Priority: 13.12.2017 JP 2017238996
(43) Date of publication of application: 21.10.2020
(73) Proprietor: Bridgestone Corporation, Chuo-Ku Tokyo 104-8340 (JP)
(72) Inventor: SHODA Yasuhiro, Tokyo 104-8340 (JP); SASAHARA Yuichi, Tokyo 104-8340 (JP); NAKATANI Kenji, Tokyo 104-8340 (JP)
(74) Representative: Marks & Clerk LLP
(86) International application number: PCT/JP2018/034067
(87) International publication number: WO 2019/116655

(56) References cited:
- EP-A1- 3 156 429
- EP-B1- 3 156 429
- WO-A1-2007/111109
- WO-A1-2015/190072
- WO-A1-2015/190073
- WO-A1-2017/065298
- WO-A1-2017/094222
- WO-A1-2017/187907
- CN-A- 101 831 135
- CN-A- 106 751 359
- JP-A- 2010 053 249
- JP-A- 2012 193 317
- JP-A- 2012 229 330
- JP-A- 2017 179 101
- JP-A- H09 111 202
- JP-A- H09 111 202

## Description

### TECHNICAL FIELD

The present disclosure relates to a rubber product which is selected from the group consisting of a tire, a rubber crawler, a seismic isolation device and a hose, and is produced using a rubber composition.

### BACKGROUND

In recent years, there has been demand for rubber compositions excellent in breaking resistance in order to improve the durability of rubber products such as tires, conveyor belts, rubber crawlers, anti-vibration devices, seismic isolation devices, and hoses.

In view of such demand, we discovered that the breaking resistance of a rubber composition is improved by using, as a rubber component of the rubber composition, a multicomponent copolymer containing a conjugated diene unit, a non-conjugated olefin unit, and an aromatic vinyl unit (PTL 1 below).

### CITATION LIST

### Patent Literature

PTL 1: WO 2015/190072 A1

### SUMMARY

### (Technical Problem)

However, our further study revealed that the rubber composition containing the multicomponent copolymer is hard at room temperature even in an unvulcanized state, has low tackiness, and has poor processability. For example, when forming a rubber product such as a tire, the rubber composition containing the multicomponent copolymer tends to have poor adhesion to other members. This decreases the productivity of the rubber product.

It could therefore be helpful to provide a rubber composition having excellent breaking resistance and processability.

It could also be helpful to provide a tire, a conveyor belt, a rubber crawler, an anti-vibration device, a seismic isolation device, and a hose having excellent durability and productivity.

### (Solution to Problem)

We provide the following.

A rubber product which is selected from the group consisting of a tire, a rubber crawler, a seismic isolation device and a hose, and is produced using a *rubber composition according to the present disclosure comprising:
a rubber component (a) containing a multicomponent copolymer (a1) that contains a conjugated diene unit, a non-conjugated olefin unit, and an aromatic vinyl unit; and
a tackifier (b).

Such a rubber composition according to the present disclosure has excellent breaking resistance and processability.

Preferably, in the rubber composition according to the present disclosure, in the multicomponent copolymer (a1), a content of the conjugated diene unit is 1 mol% to 50 mol%, a content of the non-conjugated olefin unit is 40 mol% to 97 mol%, and a content of the aromatic vinyl unit is 2 mol% to 35 mol%. In this case, the breaking resistance of the rubber composition is further improved, and also the weather resistance of the rubber composition is improved.

Preferably, in the rubber composition according to the present disclosure, a content of the tackifier (b) is 0.1 parts to 100 parts by mass with respect to 100 parts by mass of the rubber component (a). In this case, the breaking resistance and processability of the rubber composition are further improved.

Preferably, in the rubber composition according to the present disclosure, an SP value of the tackifier (b) is 4 (MPa)^{1/2} or less. In this case, the breaking resistance of the rubber composition is further improved.

Preferably, in the rubber composition according to the present disclosure, a weight-average molecular weight (Mw) of the tackifier (b) is 2000 or less. In this case, the breaking resistance of the rubber composition is further improved.

Preferably, the rubber composition according to the present disclosure further comprises at least one selected from a softener (c) and a liquid rubber (d), wherein a content of the at least one selected from the softener (c) and the liquid rubber (d) is 10 parts to 150 parts by mass with respect to 100 parts by mass of the rubber component (a). In this case, the breaking resistance and processability of the rubber composition are further improved.

Preferably, in the rubber composition according to the present disclosure, a melting point of the multicomponent copolymer (a1) measured by a differential scanning calorimeter (DSC) is 30°C to 130°C. In this case, the breaking resistance and processability of the rubber composition are further improved.

Preferably, in the rubber composition according to the present disclosure, an endothermic peak energy of the multicomponent copolymer (a1) from 0°C to 120°C measured by a differential scanning calorimeter (DSC) is 10 J/g to 150 J/g. In this case, the breaking resistance and processability of the rubber composition are further improved.

Preferably, in the rubber composition according to the present disclosure, a glass transition temperature of the multicomponent copolymer (a1) measured by a differential scanning calorimeter (DSC) is 0°C or less. In this case, the processability of the rubber composition is further improved.

Preferably, in the rubber composition according to the present disclosure, a degree of crystallinity of the multicomponent copolymer (a1) is 0.5% to 50%. In this case, the breaking resistance and processability of the rubber composition are further improved.

Preferably, in the rubber composition according to the present disclosure, a main chain of the multicomponent copolymer (a1) consists only of an acyclic structure. In this case, the crack growth resistance of the rubber composition is improved.

Preferably, in the rubber composition according to the present disclosure, in the multicomponent copolymer (a1), the non-conjugated olefin unit is an acyclic non-conjugated olefin unit. In this case, the weather resistance of the rubber composition is improved.

Preferably, the acyclic non-conjugated olefin unit consists only of an ethylene unit. In this case, the weather resistance of the rubber composition is further improved.

Preferably, in the rubber composition according to the present disclosure, in the multicomponent copolymer (a1), the aromatic vinyl unit contains a styrene unit. In this case, the weather resistance of the rubber composition is further improved.

Preferably, in the rubber composition according to the present disclosure, in the multicomponent copolymer (a1), the conjugated diene unit contains one or both of a 1,3-butadiene unit and an isoprene unit. In this case, the breaking resistance of the rubber composition is further improved.

Preferably, in the rubber composition according to the present disclosure, a content of the multicomponent copolymer (a1) in the rubber component (a) is 10 mass% to 100 mass%. In this case, the breaking resistance of the rubber composition is further improved.

A tire according to the present disclosure is produced using the foregoing rubber composition. Such a tire according to the present disclosure has excellent durability and productivity.

A rubber crawler according to the present disclosure is produced using the foregoing rubber composition. Such a rubber crawler according to the present disclosure has excellent durability and productivity.

A seismic isolation device according to the present disclosure is produced using the foregoing rubber composition. Such a seismic isolation device according to the present disclosure has excellent durability and productivity.

A hose according to the present disclosure is produced using the foregoing rubber composition. Such a hose according to the present disclosure has excellent durability and productivity.

### (Advantageous Effect)

It is therefore possible to provide a rubber composition having excellent breaking resistance and processability.

It is also possible to provide a tire, a rubber crawler, a seismic isolation device, and a hose having excellent durability and productivity.

### DETAILED DESCRIPTION

A rubber composition, a tire, a rubber crawler, a seismic isolation device, and a hose according to the present disclosure will be described in detail below based on embodiments.

### <Rubber composition>

A rubber composition according to the present disclosure comprises: a rubber component (a) containing a multicomponent copolymer (a1) that contains a conjugated diene unit, a non-conjugated olefin unit, and an aromatic vinyl unit; and a tackifier (b).

The rubber composition according to the present disclosure contains the multicomponent copolymer (a1) that contains a conjugated diene unit, a non-conjugated olefin unit, and an aromatic vinyl unit, and therefore has excellent breaking resistance. Moreover, in the rubber composition according to the present disclosure, the rubber component (a) containing the multicomponent copolymer (a1) is blended with the tackifier (b), as a result of which processability can be improved without impairing breaking resistance.

Thus, the rubber composition according to the present disclosure has excellent breaking resistance and processability.

The rubber component (a) in the rubber composition according to the present disclosure contains the multicomponent copolymer (a1) containing a conjugated diene unit, a non-conjugated olefin unit, and an aromatic vinyl unit. The multicomponent copolymer (a1) contains at least a conjugated diene unit, a non-conjugated olefin unit, and an aromatic vinyl unit. The multicomponent copolymer (a1) may consist only of a conjugated diene unit, a non-conjugated olefin unit, and an aromatic vinyl unit, or may further contain one or more other monomer units.

The conjugated diene unit is a structural unit derived from a conjugated diene compound as a monomer. The conjugated diene compound preferably has a carbon number of 4 to 8. Specific examples of the conjugated diene compound include 1,3-butadiene, isoprene, 1,3-pentadiene, and 2,3-dimethyl-1,3-butadiene. These conjugated diene compounds may be used alone or in combination of two or more. The conjugated diene compound as a monomer in the multicomponent copolymer preferably contains 1,3-butadiene and/or isoprene, more preferably consists only of 1,3-butadiene and/or isoprene, and further preferably consists only of 1,3-butadiene, from the viewpoint of effectively improving the breaking resistance of the rubber composition, tire, etc. in which the obtained multicomponent copolymer is used. In other words, the conjugated diene unit in the multicomponent copolymer preferably contains a 1,3-butadiene unit and/or an isoprene unit, more preferably consists only of a 1,3-butadiene unit and/or an isoprene unit, and further preferably consists only of a 1,3-butadiene unit.

In the multicomponent copolymer (a1), the content of the conjugated diene unit is preferably 1 mol% or more and more preferably 3 mol% or more, and is preferably 50 mol% or less, more preferably 40 mol% or less, further preferably 30 mol% or less, even more preferably 20 mol% or less, and even further preferably 15 mol% or less. The content of the conjugated diene unit being 1 mol% or more with respect to the whole multicomponent copolymer is preferable because a rubber composition and a rubber product excellent in elongation are obtained. The content of the conjugated diene unit being 50 mol% or less contributes to excellent weather resistance.

The non-conjugated olefin unit is a structural unit derived from a non-conjugated olefin compound as a monomer. The non-conjugated olefin compound preferably has a carbon number of 2 to 10. Specific examples of the non-conjugated olefin compound include α-olefins such as ethylene, propylene, 1-butene, 1-pentene, 1-hexene, 1-heptene, and 1-octene, and heteroatom-substituted alkene compounds such as vinyl pivalate, 1-phenylthioethene, and N-vinylpyrrolidone. These non-conjugated olefin compounds may be used alone or in combination of two or more. The non-conjugated olefin compound as a monomer in the multicomponent copolymer is preferably an acyclic non-conjugated olefin compound, from the viewpoint of further reducing the crystallinity of the obtained multicomponent copolymer and further improving the weather resistance of the rubber composition, tire, etc. in which the multicomponent copolymer is used. The acyclic non-conjugated olefin compound is more preferably α-olefin, further preferably α-olefin containing ethylene, and particularly preferably consists only of ethylene. In other words, the non-conjugated olefin unit in the multicomponent copolymer is preferably an acyclic non-conjugated olefin unit, and the acyclic non-conjugated olefin unit is more preferably an α-olefin unit, further preferably an α-olefin unit containing an ethylene unit, and even further preferably consists only of an ethylene unit.

In the multicomponent copolymer (a1), the content of the non-conjugated olefin unit is preferably 40 mol% or more, more preferably 45 mol% or more, further preferably 55 mol% or more, and particularly preferably 75 mol% or more, and is preferably 97 mol% or less, more preferably 95 mol% or less, and further preferably 90 mol% or less. If the content of the non-conjugated olefin unit is 40 mol% or more with respect to the whole multicomponent copolymer, the content of the conjugated diene unit or the aromatic vinyl unit decreases, as a result of which the weather resistance is improved and the breaking resistance (especially, breaking strength (Tb)) at high temperature is improved. If the content of the non-conjugated olefin unit is 97 mol% or less, the content of the conjugated diene unit or the aromatic vinyl unit increases, as a result of which the breaking resistance (especially, breaking elongation (Eb)) at high temperature is improved. The content of the non-conjugated olefin unit is preferably in a range of 45 mol% to 95 mol% and more preferably in a range of 55 mol% to 90 mol%, with respect to the whole multicomponent copolymer.

The aromatic vinyl unit is a structural unit derived from an aromatic vinyl compound as a monomer. The aromatic vinyl compound preferably has a carbon number of 8 to 10. Examples of the aromatic vinyl compound include styrene, o-methylstyrene, m-methylstyrene, p-methylstyrene, o,p-dimethylstyrene, o-ethylstyrene, m-ethylstyrene, and p-ethylstyrene. These aromatic vinyl compounds may be used alone or in combination of two or more. The aromatic vinyl compound as a monomer in the multicomponent copolymer preferably contains styrene, and more preferably consists only of styrene, from the viewpoint of further reducing the crystallinity of the obtained multicomponent copolymer and further improving the weather resistance of the rubber composition, tire, etc. in which the multicomponent copolymer is used. In other words, the aromatic vinyl unit in the multicomponent copolymer preferably contains a styrene unit, and more preferably consists only of a styrene unit.

The aromatic ring in the aromatic vinyl unit is not included in the main chain of the multicomponent copolymer, unless it binds to an adjacent unit.

In the multicomponent copolymer (a1), the content of the aromatic vinyl unit is preferably 2 mol% or more and more preferably 3 mol% or more, and is preferably 35 mol% or less, more preferably 30 mol% or less, and further preferably 25 mol% or less. If the content of the aromatic vinyl unit is 2 mol% or more, the breaking resistance at high temperature is improved. If the content of the aromatic vinyl unit is 35 mol% or less, the effects by the conjugated diene unit and the non-conjugated olefin unit are prominent. The content of the aromatic vinyl unit is preferably in a range of 2 mol% to 35 mol%, more preferably in a range of 3 mol% to 30 mol%, and further preferably in a range of 3 mol% to 25 mol%, with respect to the whole multicomponent copolymer.

The number of types of monomers in the multicomponent copolymer (a1) is not limited, as long as the multicomponent copolymer contains the conjugated diene unit, the non-conjugated olefin unit, and the aromatic vinyl unit. The multicomponent copolymer (a1) may contain one or more structural units other than the conjugated diene unit, the non-conjugated olefin unit, and the aromatic vinyl unit. From the viewpoint of achieving desired effects, the content of the other structural units is preferably 30 mol% or less, more preferably 20 mol% or less, further preferably 10 mol% or less, and particularly preferably 0 mol% (i.e. the multicomponent copolymer (a1) contains no other structural unit), with respect to the whole multicomponent copolymer.

The multicomponent copolymer (a1) is preferably a polymer formed by performing polymerization at least using one type of conjugated diene compound, one type of non-conjugated olefin compound, and one type of aromatic vinyl compound as monomers, from the viewpoint of improving breaking resistance, weather resistance, and crystallinity. In other words, the multicomponent copolymer (a1) is preferably a multicomponent copolymer containing one type of conjugated diene unit, one type of non-conjugated olefin unit, and one type of aromatic vinyl unit, more preferably a terpolymer consisting only of one type of conjugated diene unit, one type of non-conjugated olefin unit, and one type of aromatic vinyl unit, and further preferably a terpolymer consisting only of a 1,3-butadiene unit, an ethylene unit, and a styrene unit. Herein, the "one type of conjugated diene unit" includes conjugated diene units having different binding modes.

In the rubber composition according to the present disclosure, it is preferable that, in the multicomponent copolymer (a1), the content of the conjugated diene unit is 1 mol% to 50 mol%, the content of the non-conjugated olefin unit is 40 mol% to 97 mol%, and the content of the aromatic vinyl unit is 2 mol% to 35 mol%. In this case, the breaking resistance of the rubber composition is further improved, and the weather resistance of the rubber composition is also improved.

The weight-average molecular weight (Mw) of the multicomponent copolymer (a1) in terms of polystyrene is preferably 10,000 to 10,000,000, more preferably 100,000 to 9,000,000, and further preferably 150,000 to 8,000,000. As a result of the Mw of the multicomponent copolymer being 10,000 or more, sufficient mechanical strength of the rubber composition can be ensured. As a result of the Mw being 10,000,000 or less, high processability can be maintained.

The number-average molecular weight (Mn) of the multicomponent copolymer (a1) in terms of polystyrene is preferably 10,000 to 10,000,000, more preferably 50,000 to 9,000,000, and further preferably 100,000 to 8,000,000. As a result of the Mn of the multicomponent copolymer being 10,000 or more, sufficient mechanical strength of the rubber composition can be ensured. As a result of the Mn being 10,000,000 or less, high processability can be maintained.

The molecular weight distribution [Mw/Mn (weight-average molecular weight/number-average molecular weight)] of the multicomponent copolymer (a1) is preferably 1.00 to 4.00, more preferably 1.50 to 3.50, and further preferably 1.80 to 3.00. As a result of the molecular weight distribution of the multicomponent copolymer being 4.00 or less, sufficient homogeneity can be imparted to the physical properties of the multicomponent copolymer.

The weight-average molecular weight (Mw), the number-average molecular weight (Mn), and the molecular weight distribution (Mw/Mn) described above are measured by gel permeation chromatography (GPC) using polystyrene as a standard substance.

In the rubber composition according to the present disclosure, the melting point of the multicomponent copolymer (a1) measured by a differential scanning calorimeter (DSC) is preferably 30°C to 130°C, and more preferably 30°C to 110°C. If the melting point of the multicomponent copolymer (a1) is 30°C or more, the crystallinity of the multicomponent copolymer (a1) is enhanced, and the breaking resistance of the rubber composition is further improved. If the melting point is 130°C or less, the processability of the rubber composition is further improved.

Herein, the melting point is a value measured by a method described in the EXAMPLES section.

In the rubber composition according to the present disclosure, the endothermic peak energy of the multicomponent copolymer (a1) from 0°C to 120°C measured by a differential scanning calorimeter (DSC) is preferably 10 J/g to 150 J/g, and more preferably 30 J/g to 120 J/g. If the endothermic peak energy of the multicomponent copolymer (a1) is 10 J/g or more, the crystallinity of the multicomponent copolymer (a1) is enhanced, and the breaking resistance of the rubber composition is further improved. If the endothermic peak energy is 150 J/g or less, the processability of the rubber composition is further improved.

Herein, the endothermic peak energy is a value measured by a method described in the EXAMPLES section.

In the rubber composition according to the present disclosure, the glass transition temperature (Tg) of the multicomponent copolymer (a1) measured by a differential scanning calorimeter (DSC) is preferably 0°C or less, and more preferably -100°C to -10°C. If the glass transition temperature of the multicomponent copolymer (A1) is 0°C or less, the processability of the rubber composition is further improved.

Herein, the glass transition temperature is a value measured by a method described in the EXAMPLES section.

In the rubber composition according to the present disclosure, the degree of crystallinity of the multicomponent copolymer (a1) is preferably 0.5% to 50%, more preferably 3% to 45%, and further preferably 5% to 45%. If the degree of crystallinity of the multicomponent copolymer (a1) is 0.5% or more, sufficient crystallinity attributable to the non-conjugated olefin unit is ensured, and the breaking resistance of the rubber composition is further improved. If the degree of crystallinity of the multicomponent copolymer (a1) is 50% or less, the processability during kneading of the rubber composition is improved, and the tackiness of the rubber composition containing the multicomponent copolymer (a1) is improved. Consequently, the processability when attaching rubber members produced from the rubber composition to each other to form a rubber product such as a tire is improved.

Herein, the degree of crystallinity is a value measured by a method described in the EXAMPLES section.

The multicomponent copolymer (a1) preferably has a main chain consisting only of an acyclic structure. This further improves the crack growth resistance of the rubber composition. NMR is used as a principal measurement means for determining whether the main chain of the copolymer has a cyclic structure. Specifically, in the case where a peak derived from a cyclic structure existing in the main chain (for example, a peak appearing at 10 ppm to 24 ppm in the case of three- to five-membered rings) is not observed, it is determined that the main chain of the copolymer consists only of an acyclic structure.

The multicomponent copolymer (a1) can be produced through a polymerization step using the conjugated diene compound, the non-conjugated olefin compound, and the aromatic vinyl compound as monomers. Further, other steps such as a coupling step and a cleaning step may be optionally performed.

In the production of the multicomponent copolymer (a1), it is preferable to add only the non-conjugated olefin compound and the aromatic vinyl compound in the presence of a catalyst without adding the conjugated diene compound, and polymerize them. Particularly in the case of using the below-described polymerization catalyst composition, it is likely to be difficult to polymerize the non-conjugated olefin compound and/or the aromatic vinyl compound in the presence of the conjugated diene compound, because the conjugated diene compound has higher reactivity than the non-conjugated olefin compound and the aromatic vinyl compound. It is also likely to be difficult to polymerize the conjugated diene compound first and then additionally polymerize the non-conjugated olefin compound and the aromatic vinyl compound, given the properties of the catalyst.

The polymerization method may be any method such as solution polymerization, suspension polymerization, liquid phase bulk polymerization, emulsion polymerization, gas phase polymerization, or solid phase polymerization. In the case of using a solvent in the polymerization reaction, any solvent that is inactive in the polymerization reaction can be used. Examples include toluene, cyclohexane, and normal hexane.

The polymerization step may be performed in one stage, or in multiple (i.e. two or more) stages. The polymerization step in one stage is a step of causing simultaneous reaction of all types of monomers to be polymerized, i.e. the conjugated diene compound, the non-conjugated olefin compound, the aromatic vinyl compound, and other monomers, and preferably the conjugated diene compound, the non-conjugated olefin compound, and the aromatic vinyl compound, to polymerize them. The polymerization step in multiple stages is a step of first causing reaction of the whole or part of one or two types of monomers to form a polymer (first polymerization stage) and then performing one or more stages (second to last polymerization stages) in which the remaining types of monomers and/or the balance of the one or two types of monomers is added to polymerize them. In particular, the polymerization step in the production of the multicomponent copolymer is preferably performed in multiple stages.

In the polymerization step, the polymerization reaction is preferably performed in an atmosphere of inert gas, preferably nitrogen gas or argon gas. The polymerization temperature in the polymerization reaction is not limited, but is preferably in a range of -100°C to 200°C as an example, and may be approximately room temperature. The pressure in the polymerization reaction is preferably in a range of 0.1 MPa to 10.0 MPa, in order to sufficiently incorporate the conjugated diene compound into the polymerization reaction system. The reaction time in the polymerization reaction is not limited, and may be selected as appropriate depending on conditions such as the catalyst type and the polymerization temperature. For example, the reaction time is preferably in a range of 1 sec to 10 days. The polymerization step may be performed in one stage, or in multiple (i.e. two or more) stages.

In the polymerization step of the conjugated diene compound, polymerization may be terminated using a terminator such as methanol, ethanol, or isopropanol.

The polymerization step is preferably performed in multiple stages. It is more preferable to perform a first step of mixing a first monomer material containing at least the aromatic vinyl compound and a polymerization catalyst to obtain a polymerization mixture, and a second step of introducing, into the polymerization mixture, a second monomer material containing at least one selected from the group consisting of the conjugated diene compound, the non-conjugated olefin compound, and the aromatic vinyl compound. Further preferably, the first monomer material does not contain the conjugated diene compound and the second monomer material contains the conjugated diene compound.

The first monomer material used in the first step may contain the non-conjugated olefin compound in addition to the aromatic vinyl compound. The first monomer material may contain the whole or part of the aromatic vinyl compound used. The non-conjugated olefin compound is contained in at least one of the first monomer material and the second monomer material.

The first step is preferably performed in an atmosphere of inert gas, preferably nitrogen gas or argon gas, in a reactor. The temperature (reaction temperature) in the first step is not limited, but is preferably in a range of -100°C to 200°C as an example, and may be approximately room temperature. The pressure in the first step is not limited, but is preferably in a range of 0.1 MPa to 10.0 MPa in order to sufficiently incorporate the aromatic vinyl compound into the polymerization reaction system. The time (reaction time) in the first step may be selected as appropriate depending on conditions such as the polymerization catalyst type and the reaction temperature. For example, in the case where the reaction temperature is 25°C to 80°C, the reaction time is preferably in a range of 5 min to 500 min.

The polymerization method for obtaining the polymerization mixture in the first step may be any method such as solution polymerization, suspension polymerization, liquid phase bulk polymerization, emulsion polymerization, gas phase polymerization, or solid phase polymerization. In the case of using a solvent in the polymerization reaction, any solvent that is inactive in the polymerization reaction can be used. Examples include toluene, cyclohexane, and normal hexane.

The second monomer material used in the second step is preferably composed of: the conjugated diene compound alone; the conjugated diene compound and the non-conjugated olefin compound; the conjugated diene compound and the aromatic vinyl compound; or the conjugated diene compound, the non-conjugated olefin compound, and the aromatic vinyl compound.

In the case where the second monomer material contains at least one selected from the group consisting of the non-conjugated olefin compound and the aromatic vinyl compound besides the conjugated diene compound, these monomer materials may be mixed together with a solvent or the like beforehand, and then introduced into the polymerization mixture. Alternatively, each monomer material may be introduced in an individual state. The monomer materials may be added simultaneously or sequentially. The method of introducing the second monomer material into the polymerization mixture in the second step is not limited, but preferably each monomer material is continuously added to the polymerization mixture while controlling the flow rate (i.e. metering). In the case of using such a monomer material (e.g. ethylene as the non-conjugated olefin compound under the conditions of room temperature and ordinary pressure) that is gas under the conditions of the polymerization reaction system, the monomer material can be introduced into the polymerization reaction system at predetermined pressure.

The second step is preferably performed in an atmosphere of inert gas, preferably nitrogen gas or argon gas. The temperature (reaction temperature) in the second step is not limited, but is preferably in a range of -100°C to 200°C as an example, and may be approximately room temperature. When the reaction temperature is increased, the selectivity of cis-1,4 bond in the conjugated diene unit may decrease. The pressure in the second step is not limited, but is preferably in a range of 0.1 MPa to 10.0 MPa in order to sufficiently incorporate the monomer(s) such as the conjugated diene compound into the polymerization reaction system. The time (reaction time) in the second step may be selected as appropriate depending on conditions such as the polymerization catalyst type and the reaction temperature. For example, the reaction time is preferably in a range of 0.1 hr to 10 days.

In the second step, the polymerization reaction may be terminated using a terminator such as methanol, ethanol, or isopropanol.

The polymerization step for the non-conjugated olefin compound, the aromatic vinyl compound, and the conjugated diene compound preferably includes a step of polymerizing the monomers in the presence of a first polymerization catalyst composition, a second polymerization catalyst composition, a third polymerization catalyst composition, or a fourth polymerization catalyst composition described below.

### - First polymerization catalyst composition -

The first polymerization catalyst composition is, for example, a polymerization catalyst composition containing:
a component (A1): a rare-earth element compound or a reaction product of the rare-earth element compound and a Lewis base, the rare-earth element compound or the reaction product having no bond between the rare-earth element and carbon; and
a component (B1): at least one selected from the group consisting of an ionic compound (B1-1) consisting of a non-coordinating anion and a cation, an aluminoxane (B1-2), and at least one type of halogen compound (B1-3) from among a Lewis acid, a complex compound of a metal halide and a Lewis base, and an organic compound containing an active halogen.
In the case where the first polymerization catalyst composition contains at least one of the ionic compound (B1-1) and the halogen compound (B1-3), the polymerization catalyst composition further contains
a component (C1): an organic metal compound represented by the following general formula (I):

   YR¹ₐR²_{b}R³_{c} ... (I)
(where Y is a metal selected from groups 1, 2, 12, and 13 in the periodic table, R¹ and R² are each a monovalent hydrocarbon group having a carbon number of 1 to 10 or a hydrogen atom, R³ is a monovalent hydrocarbon group having a carbon number of 1 to 10, R¹, R², and R³ may be the same or different, a is 1 and b and c are 0 in the case where Y is a metal selected from group 1 in the periodic table, a and b are 1 and c is 0 in the case where Y is a metal selected from groups 2 and 12 in the periodic table, and a, b, and c are 1 in the case where Y is a metal selected from group 13 in the periodic table).

Since the ionic compound (B1-1) and the halogen compound (B1-3) do not contain carbon atoms to be supplied to the component (A1), these compounds need the component (C1) as a source for supplying carbon to the component (A1). Even in the case where the polymerization catalyst composition contains the aluminoxane (B 1-2), the polymerization catalyst composition can contain the component (C1). The first polymerization catalyst composition may also contain one or more other components, such as a co-catalyst, contained in ordinary rare-earth element compound-based polymerization catalyst compositions.

The concentration of the component (A1) contained in the first polymerization catalyst composition in the polymerization reaction system is preferably in a range of 0.1 mol/l to 0.0001 mol/l.

The polymerization catalyst composition preferably contains an additive (D1) that can be an anionic ligand.

The component (A1) used in the first polymerization catalyst composition is a rare-earth element compound or a reaction product of the rare-earth element compound and a Lewis base. The rare-earth element compound or the reaction product of the rare-earth element compound and the Lewis base does not have a bond of the rare-earth element with carbon. In the case where the rare-earth element compound or the reaction product does not have a rare-earth element-carbon bond, the compound is stable and easy to handle. Herein, the rare-earth element compound is a compound containing a rare-earth element (M), namely, a lanthanoid element composed of any of the elements with atomic numbers 57 to 71 in the periodic table, or scandium or yttrium.

Specific examples of the lanthanoid element include lanthanum, cerium, praseodymium, neodymium, promethium, samarium, europium, gadolinium, terbium, dysprosium, holmium, erbium, thulium, ytterbium, and lutetium. These components (A1) may be used alone or in combination of two or more.

In the rare-earth element compound, the rare-earth metal is preferably a divalent or trivalent salt or a complex compound, and more preferably a rare-earth element compound containing one or more ligands selected from a hydrogen atom, a halogen atom, and an organic compound residue. Furthermore, the rare-earth element compound or the reaction product of the rare-earth element compound and the Lewis base is preferably represented by the following general formula (II) or (III):

M¹¹X¹₁₂·L¹¹w ... (II)

M¹¹X¹¹₃·L¹¹w ... (III)

(where M¹¹ is a lanthanoid element, scandium, or yttrium, X¹¹ are each independently a hydrogen atom, a halogen atom, an alkoxy group, a thiolate group, an amino group, a silyl group, an aldehyde residue, a ketone residue, a carboxylic acid residue, a thiocarboxylic acid residue, or a phosphorous compound residue, L¹¹ is a Lewis base, and w is 0 to 3).

Examples of the group (ligand) binding to the rare earth element of the rare earth element compound include a hydrogen atom, a halogen atom, an alkoxy group (a group obtained by removing hydrogen from a hydroxyl group of alcohol, and forming a metal alkoxide), a thiolate group (a group obtained by removing hydrogen from a thiol group of a thiol compound, and forming a metal thiolate), an amino group (a group obtained by removing one hydrogen atom binding to a nitrogen atom of ammonia, a primary amine, or a secondary amine, and forming a metal amide), a silyl group, an aldehyde residue, a ketone residue, a carboxylic acid residue, a thiocarboxylic acid residue, and a phosphorus compound residue.

Specific examples of the group (ligand) include: a hydrogen atom; aliphatic alkoxy groups such as a methoxy group, an ethoxy group, a propoxy group, an n-butoxy group, an isobutoxy group, a sec-butoxy group, and a tert-butoxy group; a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group; aliphatic thiolate groups such as a thiomethoxy group, a thioethoxy group, a thiopropoxy group, a thio-n-butoxy group, a thioisobutoxy group, a thio-sec-butoxy group, and a thiotert-butoxy group; arylthiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group; aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; bistrialkylsilylamino groups such as a bistrimethylsilylamino group; silyl groups such as a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group; and halogen atoms such as a fluorine atom, a chlorine atom, a bromine atom, and an iodine atom.

Specific examples of the group (ligand) also include: residues of aldehydes such as salicylaldehyde, 2-hydroxy-1-naphthaldehyde, and 2-hydroxy-3-naphthaldehyde; residues of hydroxyphenones such as 2'-hydroxyacetophenone, 2'-hydroxybutyrophenone, and 2'-hydroxypropiophenone; residues of diketones such as acetylacetone, benzoylacetone, propionylacetone, isobutylacetone, valerylacetone, and ethylacetylacetone; residues of carboxylic acids such as isovaleric acid, capric acid, octanoic acid, lauric acid, myristic acid, palmitic acid, stearic acid, isostearic acid, oleic acid, linoleic acid, cyclopentanecarboxylic acid, naphthenic acid, ethylhexanoic acid, pivalic acid, Versatic acid [product name, made by Shell Chemicals Japan, a synthetic acid formed from a mixture of C10 monocarboxylic acid isomers], phenylacetic acid, benzoic acid, 2-naphthoic acid, maleic acid, and succinic acid; residues of thiocarboxylic acids such as hexanethioic acid, 2,2-dimethylbutanethioic acid, decanethioic acid, and thiobenzoic acid; residues of phosphoric acid esters such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauryl phosphate, dioleyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, and (2-ethylhexyl)(p-nonylphenyl) phosphate; residues of phosphonic acid esters such as monobutyl 2-ethylhexylphosphonate, mono-2-ethylhexyl 2-ethylhexylphosphonate, mono-2-ethylhexyl phenylphosphonate, mono-p-nonylphenyl 2-ethylhexylphosphonate, mono-2-ethylhexyl phosphonate, mono-1-methylheptyl phosphonate, and mono-p-nonylphenyl phosphonate; and residues of phosphinic acids such as dibutylphosphinic acid, bis(2-ethylhexyl)phosphinic acid, bis(1-methylheptyl)phosphinic acid, dilaurylphosphinic acid, dioleylphosphinic acid, diphenylphosphinic acid, bis(p-nonylphenyl)phosphinic acid, butyl (2-ethylhexyl)phosphinic acid, (2-ethylhexyl)(1-methylheptyl)phosphinic acid, (2-ethylhexyl)(p-nonylphenyl)phosphinic acid, butylphosphinic acid, 2-ethylhexylphosphinic acid, 1-methylheptylphosphinic acid, oleylphosphinic acid, laurylphosphinic acid, phenylphosphinic acid, and p-nonylphenylphosphinic acid.

These groups (ligands) may be used alone or in combination of two or more.

In the component (A1) used in the first polymerization catalyst composition, examples of the Lewis base reacting with the rare-earth element compound include tetrahydrofuran, diethyl ether, dimethylaniline, trimethylphosphine, lithium chloride, neutral olefins, and neutral diolefins. In the case where the rare-earth element compound reacts with a plurality of Lewis bases (in the case where w is 2 or 3 in the general formulae (II) and (III)), the Lewis bases L¹¹ may be the same or different.

Preferably, the rare-earth element compound contains a compound represented by the following general formula (IV):

M-(NQ¹)(NQ²)(NQ³) ... (IV)

(where M is at least one selected from a lanthanoid element, scandium and yttrium, and NQ¹, NQ², and NQ³ are each an amino group, may be the same or different, and each have an M-N bond).

That is, the compound represented by the general formula (IV) is a metal amide having three M-N bonds. Since the compound has three M-N bonds, the bonds are chemically equivalent to one another. Such a compound is advantageous in that it has a stable structure and is easy to handle.

The amino group represented by NQ (NQ¹, NQ², and NQ³) in the general formula (IV) may be any of: aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tert-butylphenylamino group; and bistrialkylsilylamino groups such as a bistrimethylsilylamino group. Of these, a bistrimethylsilylamino group is preferable.

The component (B1) used in the first polymerization catalyst composition is at least one selected from the group consisting of an ionic compound (B1-1), an aluminoxane (B1-2), and a halogen compound (B1-3). The total content of the component (B1) in the first polymerization catalyst composition is preferably 0.1 times to 50 times mol with respect to the component (A1).

An example of the ionic compound (B 1-1) is an ionic compound consisting of a non-coordinating anion and a cation, and capable of reacting with the rare-earth element compound or the reaction product of the rare-earth element compound and a Lewis base as the component (A1) to form a cationic transition metal compound.

Examples of the non-coordinating anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, and tridecahydride-7,8-dicarbaundecaborate.

Examples of the cation include a carbonium cation, an oxonium cation, an ammonium cation, a phosphonium cation, a cycloheptatrienyl cation, and a ferrocenium cation having a transition metal. Specific examples of the carbonium cation include trisubstituted carbonium cations such as a triphenylcarbonium cation and a tri(substituted phenyl)carbonium cation. Specific examples of the tri(substituted phenyl)carbonium cation include a tri(methylphenyl)carbonium cation and a tri(dimethylphenyl)carbonium cation. Specific examples of the ammonium cation include: trialkylammonium cations such as a trimethylammonium cation, a triethylammonium cation, a tripropylammonium cation, and a tributylammonium cation (e.g. a tri(n-butyl)ammonium cation); N,N-dialkylanilinium cations such as an N,N-dimethylanilinium cation, an N,N-diethylanilinium cation, and an N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation.

The ionic compound (B1-1) is preferably a compound obtained by combining a non-coordinating anion and a cation selected from the aforementioned non-coordinating anions and cations. Specifically, N,N-dimethylanilinium tetrakis(pentafluorophenyl)borate, triphenylcarbonium tetrakis(pentafluorophenyl)borate, and the like are preferable. These ionic compounds (B1-1) may be used alone or in combination of two or more. The content of the ionic compound (B1-1) in the first polymerization catalyst composition is preferably 0.1 times to 10 times mol, and more preferably approximately 1 time mol, with respect to the component (A1).

The aluminoxane (B1-2) is a compound obtained by causing an organic aluminum compound to come into contact with a condensation agent, and is, for example, a linear aluminoxane or a cyclic aluminoxane having a repeating unit represented by the general formula: (-Al(R')O-) (where R' is a hydrocarbon group having a carbon number of 1 to 10, some hydrocarbon groups may be substituted with a halogen atom and/or an alkoxy group, and the polymerization degree of the repeating unit is preferably 5 or more, and more preferably 10 or more). Specific examples of R' include a methyl group, an ethyl group, a propyl group, and an isobutyl group. Of these, a methyl group is preferable. Examples of the organic aluminum compound used as a raw material for the aluminoxane include trialkylaluminums such as trimethyl aluminum, triethyl aluminum, tributyl aluminum, and triisobutyl aluminum, and mixtures thereof. Trimethyl aluminum is particularly preferable. For example, aluminoxane in which a mixture of trimethyl aluminum and tributyl aluminum is used as a raw material may be preferably used. With regard to the content of the aluminoxane (B 1-2) in the first polymerization catalyst composition, the ratio of the aluminum element A1 in the aluminoxane to the rare-earth element M constituting the component (A1), Al/M, is preferably approximately 10 to 1000.

The halogen compound (B 1-3) consists of at least one of Lewis acid, a complex compound of a metal halide and a Lewis base, and an organic compound containing an active halogen, and for example, is capable of reacting with the rare-earth element compound or the reaction product of the rare-earth element compound and a Lewis base as the component (A1) to form a cationic transition metal compound, a halogenated transition metal compound, or a compound having a transition metal center with lack of electric charge. The total content of the halogen compound (B 1-3) in the first polymerization catalyst composition is preferably 1 time to 5 times mol with respect to the component (A1).

As the Lewis acid, boron-containing halogen compounds such as B(C₆F₅)₃ or aluminum-containing halogen compounds such as Al(C₆F₅)₃ can be used. In addition, halogen compounds containing an element belonging to group 3, 4, 5, 6 or 8 in the periodic table can also be used. Preferably, an aluminum halide or an organic metal halide can be used. As the halogen element, chlorine or bromine is preferable.

Specific examples of the Lewis acid include methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, dibutyltin dichloride, aluminum tribromide, antimony trichloride, antimony pentachloride, phosphorus trichloride, phosphorus pentachloride, tin tetrachloride, titanium tetrachloride, and tungsten hexachloride. Of these, diethyl aluminum chloride, ethyl aluminum sesquichloride, ethyl aluminum dichloride, diethyl aluminum bromide, ethyl aluminum sesquibromide, and ethyl aluminum dibromide are particularly preferable.

Examples of the metal halide constituting the complex compound of the metal halide and the Lewis base include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, and gold bromide. Of these, magnesium chloride, calcium chloride, barium chloride, manganese chloride, zinc chloride, and copper chloride are preferable, and magnesium chloride, manganese chloride, zinc chloride, and copper chloride are particularly preferable.

Examples of the Lewis base constituting the complex compound of the metal halide and the Lewis base include a phosphorus compound, a carbonyl compound, a nitrogen compound, an ether compound, and alcohol. Specific examples include tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrile acetone, valerylacetone, ethyl acetyl acetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethyl-hexyl alcohol, oleyl alcohol, stearyl alcohol, phenol, benzyl alcohol, 1-decanol, and lauryl alcohol. Of these, tri-2-ethylhexyl phosphate, tricresyl phosphate, acetylacetone, 2-ethylhexanoic acid, versatic acid, 2-ethylhexyl alcohol, 1-decanol, and lauryl alcohol are preferable.

The Lewis base is allowed to react with the metal halide at a ratio of 0.01 mol to 30 mol, and preferably of 0.5 mol to 10 mol, with respect to 1 mol of the metal halide. By using a reaction product of the rare-earth element compound with this Lewis base, the amount of metal remaining in the polymer can be reduced.

An example of the organic compound containing an active halogen is benzyl chloride.

The component (C1) used in the first polymerization catalyst composition is an organic metal compound represented by the following general formula (I):

YR¹ₐR²_{b}R³_{c} ... (I)

(where Y is a metal selected from groups 1, 2, 12, and 13 in the periodic table, R¹ and R² are each a monovalent hydrocarbon group having a carbon number of 1 to 10 or a hydrogen atom, R³ is a monovalent hydrocarbon group having a carbon number of 1 to 10, R¹, R², and R³ may be the same or different, a is 1 and b and c are 0 in the case where Y is a metal selected from group 1 in the periodic table, a and b are 1 and c is 0 in the case where Y is a metal selected from groups 2 and 12 in the periodic table, and a, b, and c are 1 in the case where Y is a metal selected from group 13 in the periodic table). The component (C1) is preferably an organic aluminum compound represented by the following general formula (V):

AlR³R²R³ ... (V)

(where R¹ and R² are each a monovalent hydrocarbon group having a carbon number of 1 to 10 or a hydrogen atom, R³ is a monovalent hydrocarbon group having a carbon number of 1 to 10, and R¹, R², and R³ may be the same or different).

Examples of the organic aluminum compound represented by the general formula (V) include: trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, and trioctyl aluminum; diethyl aluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, and diisooctyl aluminum hydride; and ethyl aluminum dihydride, n-propyl aluminum dihydride, and isobutyl aluminum dihydride. Of these, triethyl aluminum, triisobutyl aluminum, diethyl aluminum hydride, and diisobutyl aluminum hydride are preferable. The aforementioned organic metal compounds as the component (C1) may be used alone or in combination of two or more.

The content of the organic metal compound in the first polymerization catalyst composition is preferably 1 time to 50 times mol, and more preferably approximately 10 times mol, with respect to the component (A1).

The addition of the additive (D1) that can be an anionic ligand is preferable because it exhibits the effect of enabling the synthesis of the multicomponent copolymer with a higher content of cis-1,4 bonds at a high yield.

The additive (D1) is not limited, as long as it is exchangeable with the amino group of the component (A1). The additive (D1) preferably has any of an OH group, an NH group, and an SH group.

Specific examples of a compound having an OH group include aliphatic alcohol and aromatic alcohol. Specific examples of such a compound include 2-ethyl-1-hexanol, dibutylhydroxytoluene, alkylated phenol, 4,4'-thiobis-(6-t-butyl-3-methylphenol), 4,4'-butylidene bis-(6-t-butyl-3-methylphenol), 2,2'-methylene bis-(4-methyl-6-t-butylphenol), 2,2'-methylene bis-(4-ethyl-6-t-butylphenol), 2,6-di-t-4-ethylphenol, 1,1,3-tris-(2-methyl-4-hydroxy-5-t-butylphenyl)butane, n-octadecyl-3-(4-hydroxy-3,5-di-t-butylphenyl)propionate, tetrakis[methylene-3-(3,5-di-t-butyl-4-hydroxyphenyl)propionate]methane, dilaurylthiodipropionate, distearylthiodipropionate, and dimyristylylthiopropionate, but the examples are not limited thereto. For example, hindered phenol-based compounds may include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, pentaerythryl-tetrakis[3-(3,5-di-t-butyl-4-hydroxyphenyl)propionate], 2,2-thio-diethylene-bis[3-(3,5-di-t-butyl-4-hydroxyphenyl)propionate], octadecyl-3-(3,5-di-t-butyl-4-hydroxyphenyl)propionate, N,N'-hexamethylene bis(3,5-di-t-butyl-4-hydroxy-hydrocinnamamide), 3,5-t-butyl-4-hydroxybenzyl phosphonate-diethyl ester, 1,3,5-trimethyl-2,4,6-tris(3,5-di-t-butyl-4-hydroxybenzyl)benzene, tris-(3,5-di-t-butyl-4-hydroxybenzyl)-isocyanurate, octylated diphenylamine, and 2,4-bis[(octylthio)methyl]-o-cresol. An example of a hydrazine-based compound is N,N'-bis[3-(3,5-di-t-butyl-4-hydroxyphenyl)propionyl]hydrazine.

Examples of a compound having an NH group include primary amines and secondary amines, such as alkylamine or arylamine. Specific examples include dimethylamine, diethylamine, pyrrole, ethanolamine, diethanolamine, dicyclohexylamine, N,N'-dibenzylethylenediamine, and bis(2-diphenylphosphinophenyl)amine.

Examples of a compound having an SH group include aliphatic thiol, aromatic thiol, and compounds represented by the following general formulae (VI) and (VII): 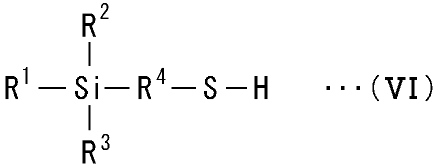 (where R¹, R² and R³ are each independently represented by O-CⱼH₂ⱼ₊₁, -(O-CₖH₂ₖ-)ₐ-O-CₘH₂ₘ₊₁, or CₙH₂ₙ₊₁, j, m, and n are each independently 0 to 12, k and a are each independently 1 to 12, and R⁴ is a linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group, or aralkylene group having a carbon number of 1 to 12).

Specific examples of the compound represented by the general formula (VI) include 3-mercaptopropyltrimethoxysilane, 3-mercaptopropyltriethoxysilane, 3-mercaptopropylmethyldimethoxysilane, (mercaptomethyl)dimethylethoxysilane, and mercaptomethyltrimethoxysilane. 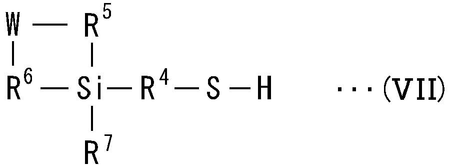 (where W is represented by -NR⁸-, -O-, or CR⁹R¹⁰- (where R⁸ and R⁹ are -CₚH₂ₚ₊₁, R¹⁰ is -C_{q}H_{2q+1}, and p and q are each independently 0 to 20), R⁵ and R⁶ are each independently represented by M-CᵣH₂ᵣ- (where M is -O- or -CH₂-, and r is 1 to 20), R⁷ is represented by -O-CⱼH₂ⱼ₊₁, -(O-CₖH₂ₖ-)ₐ-O-CₘH₂ₘ₊₁, or CₙH₂ₙ₊₁, j, m and n are each independently 0 to 12, k and a are each independently 1 to 12, and R⁴ is a linear, branched or cyclic, saturated or unsaturated alkylene group, cycloalkylene group, cycloalkylalkylene group, cycloalkenylalkylene group, alkenylene group, cycloalkenylene group, cycloalkylalkenylene group, cycloalkenylalkenylene group, arylene group, or aralkylene group having a carbon number of 1 to 12).

Specific examples of the compound represented by the general formula (VII) include 3-mercaptopropyl(ethoxy)-1,3-dioxa-6-methylaza-2-silacyclooctane, 3-mercaptopropyl(ethoxy)-1,3-dioxa-6-butylaza-2-silacyclooctane, and 3-mercaptopropyl(ethoxy)-1,3-dioxa-6-dodecylaza-2-silacyclooctane.

As the additive (D1), an anionic tridentate ligand precursor represented by the following general formula (VIII) can be preferably used:

E¹-T¹-X-T²-E² ... (VIII)

(where X is an anionic electron-donating group containing a coordinating atom selected from the atoms of group 15 in the periodic table, E¹ and E² are each independently a neutral electron-donating group containing a coordinating atom selected from the atoms of groups 15 and 16 in the periodic table, and T¹ and T² are crosslinking groups that crosslink X with E¹ and E², respectively).

The additive (D1) is preferably added in an amount of 0.01 mol to 10 mol, and particularly, of 0.1 mol to 1.2 mol, to 1 mol of the rare-earth element compound. If the additive amount is 0.1 mol or more, the polymerization reaction of monomers progresses sufficiently. It is preferable to set the amount of the additive (D1) to be equal to the amount of the rare-earth element compound (1.0 mol), but the additive (D1) may be added in an excessive amount. An additive amount of 1.2 mol or less is preferable because the loss of the reagent is little.

In the general formula (VIII), the neutral electron-donating groups E¹ and E² are groups containing coordinating atoms selected from groups 15 and 16 in the periodic table. E¹ and E² may be the same group or different groups. Examples of the coordinating atom include nitrogen N, phosphorus P, oxygen O, and sulfur S. Of these, P is preferable.

When the coordinating atom contained in E¹ and E² is P, examples of the neutral electron-donating group E¹ or E² include: diarylphosphino groups such as a diphenylphosphino group and a ditolylphosphino group; dialkylphosphino groups such as a dimethylphosphino group and a diethylphosphino group; and alkylarylphosphino groups such as a methylphenylphosphino group. Of these, a diarylphosphino group is preferable.

When the coordinating atom contained in E¹ and E² is N, examples of the neutral electron-donating group E¹ or E² include: dialkylamino groups such as a dimethylamino group, a diethylamino group, and a bis(trimethylsilyl)amino group; diarylamino groups such as a diphenylamino group; and alkylarylamino groups such as a methylphenyl group.

When the coordinating atom contained in E¹ and E² is O, examples of the neutral electron-donating group E¹ or E² include: alkoxy groups such as a methoxy group, an ethoxy group, a propoxy group, and a butoxy group; and aryloxy groups such as a phenoxy group and a 2,6-dimethylphenoxy group.

When the coordinating atom contained in the above E¹ and E² is S, examples of the neutral electron-donating group E¹ or E² include: alkylthio groups such as a methylthio group, an ethylthio group, a propylthio group, and a butylthio group; and arylthio groups such as a phenylthio group and a tolylthio group.

The anionic electron-donating group X is a group containing a coordinating atom selected from group 15 in the periodic table. Preferred examples of the coordinating atom include phosphorus P and nitrogen N, and the coordinating atom is more preferably N.

The crosslinking groups T¹ and T² are not limited, as long as they are groups capable of crosslinking X with E¹ and E². An example of such a crosslinking group is an arylene group optionally having a substituent on an aryl ring. T¹ and T² may be the same group or different groups.

The arylene group may be a phenylene group, a naphthylene group, a pyridylene group, a thienylene group (preferably, a phenylene group or a naphthylene group), or the like. Any given group may be substituted on the aryl ring of the arylene group. Examples of the substituent include: alkyl groups such as a methyl group and an ethyl group; aryl groups such as a phenyl group and a tolyl group; halogen groups such as fluoro, chloro, and bromo; and silyl groups such as a trimethylsilyl group.

A more preferred example of the arylene group is a 1,2-phenylene group.

### - Second polymerization catalyst composition -

A second polymerization catalyst composition is, for example, a polymerization catalyst composition containing at least one complex selected from the group consisting of a metallocene complex represented by the following general formula (IX), a metallocene complex represented by the following general formula (X), and a half-metallocene cation complex represented by the following general formula (XI): 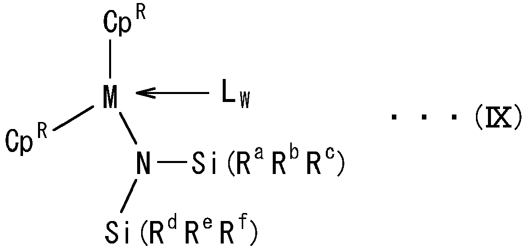 (where M is a lanthanoid element, scandium, or yttrium, Cp^{R} are each independently an unsubstituted or substituted indenyl, R^{a} to R^{f} are each independently a hydrogen atom or an alkyl group having a carbon number of 1 to 3, L is a neutral Lewis base, and w is an integer of 0 to 3), 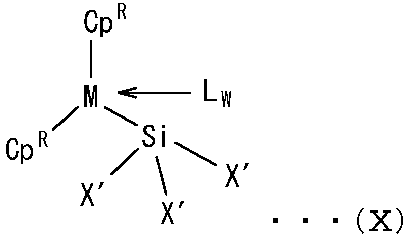 (where M is a lanthanoid element, scandium, or yttrium, Cp^{R} are each independently an unsubstituted or substituted indenyl, X' is a hydrogen atom, a halogen atom, an alkoxy group, a thiolate group, an amino group, a silyl group, or a hydrocarbon group having a carbon number of 1 to 20, L is a neutral Lewis base, and w is an integer of 0 to 3), 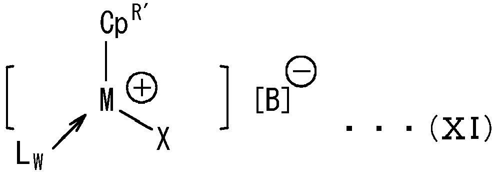 (where M is a lanthanoid element, scandium, or yttrium, Cp^{R'} are each independently an unsubstituted or substituted cyclopentadienyl, indenyl, or fluorenyl, X is a hydrogen atom, a halogen atom, an alkoxy group, a thiolate group, an amino group, a silyl group, or a monovalent hydrocarbon group having a carbon number of 1 to 20, L is a neutral Lewis base, w is an integer of 0 to 3, and [B]⁻ is a non-coordinating anion).

The second polymerization catalyst composition may further contain one or more other components, such as a co-catalyst, contained in ordinary metallocene complex-containing polymerization catalyst compositions. Herein, the metallocene complex is a complex compound having one or more cyclopentadienyl groups or a derivative thereof bonded to the central metal. In particular, the metallocene complex may be referred to as a half metallocene complex in the case where the central metal has one cyclopentadienyl group or one derivative thereof bonded thereto.

In the polymerization reaction system, the concentration of the complex contained in the second polymerization catalyst composition is preferably in a range of 0.1 mol/L to 0.0001 mol/L.

In the metallocene complex represented by each of the general formulae (IX) and (X), Cp^{R} is an unsubstituted or substituted indenyl group. Cp^{R} having an indenyl ring as a basic skeleton may be represented by C₉H₇₋ₓRₓ or C₉H₁₁₋ₓRₓ. Here, X is an integer of 0 to 7 or 0 to 11. R is preferably each independently a hydrocarbyl group or a metalloid group. The hydrocarbyl group preferably has a carbon number of 1 to 20, more preferably has a carbon number of 1 to 10, and further preferably has a carbon number of 1 to 8. Preferred examples of the hydrocarbyl group include a methyl group, an ethyl group, a phenyl group, and a benzyl group. Examples of metalloid in the metalloid group include germyl (Ge), stannyl (Sn), and silyl (Si). The metalloid group preferably has a hydrocarbyl group which is the same as the hydrocarbyl group described above. Specific examples of the metalloid group include a trimethylsilyl group. Specific examples of the substituted indenyl include 2-phenyl indenyl and 2-methyl indenyl. Two Cp^{R} in the formulae (IX) and (X) may be the same or different.

In the half metallocene cation complex represented by the general formula (XI), Cp^{R'} is an unsubstituted or substituted cyclopentadienyl, indenyl, or fluorenyl, with an unsubstituted or substituted indenyl being preferred.

In the general formula (XI), Cp^{R'} having a cyclopentadienyl ring as a basic skeleton is represented by C₅H₅₋ₓRₓ. Here, X is an integer of 0 to 5. R is preferably each independently a hydrocarbyl group or a metalloid group. The hydrocarbyl group preferably has a carbon number of 1 to 20, more preferably has a carbon number of 1 to 10, and further preferably has a carbon number of 1 to 8. Preferred examples of the hydrocarbyl group include a methyl group, an ethyl group, a phenyl group, and a benzyl group. Examples of metalloid in the metalloid group include germyl (Ge), stannyl (Sn), and silyl (Si). The metalloid group preferably has a hydrocarbyl group which is the same as the hydrocarbyl group described above. Specific examples of the metalloid group include a trimethylsilyl group. Cp^{R'} having a cyclopentadienyl ring as a basic skeleton is exemplified by the following formula: 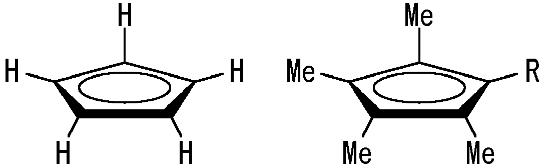 (where R is a hydrogen atom, a methyl group, or an ethyl group).

In the general formula (XI), Cp^{R'} having the indenyl ring as a basic skeleton is similarly defined as Cp^{R} of the general formulas (IX) and (X), and preferred examples are the same as above.

In the general formula (XI), Cp^{R'} having the fluorenyl ring as a basic skeleton may be represented by C₁₃H₉₋ₓRₓ or C₁₃H₁₇₋ₓRₓ. Here, X is an integer of 0 to 9 or 0 to 17. R is preferably each independently a hydrocarbyl group or a metalloid group. The hydrocarbyl group preferably has a carbon number of 1 to 20, more preferably has a carbon number of 1 to 10, and further preferably has a carbon number of 1 to 8. Preferred examples of the hydrocarbyl group include a methyl group, an ethyl group, a phenyl group, and a benzyl group. Examples of metalloid in the metalloid group include germyl Ge, stannyl Sn, and silyl Si. The metalloid group preferably has a hydrocarbyl group which is the same as the hydrocarbyl group described above. A specific example of the metalloid group is a trimethylsilyl group.

The central metal M in the general formulae (IX), (X), and (XI) is a lanthanoid element, scandium, or yttrium. Lanthanoid elements include 15 elements with atomic numbers 57 to 71, any of which may be used. Preferred examples of the central metal M include samarium Sm, neodymium Nd, praseodymium Pr, gadolinium Gd, cerium Ce, holmium Ho, scandium Sc, and yttrium Y.

The metallocene complex represented by the general formula (IX) includes a silyl amide ligand [-N(SiR₃)₂]. Groups represented by R (R^{a} to R^{f} in the general formula (IX)) in the silyl amide ligand are each independently a hydrogen atom or an alkyl group having a carbon number of 1 to 3, and at least one of R^{a} to R^{f} is preferably a hydrogen atom. As a result of at least one of R^{a} to R^{f} being a hydrogen atom, the catalyst can be synthesized easily, and the bulkiness around silicon can be reduced, facilitating introduction of the non-conjugated olefin or the aromatic vinyl compound. From the same perspective, it is more preferred that at least one of R^{a} to R^{c} is a hydrogen atom and at least one of R^{d} to R^{f} is a hydrogen atom. A methyl group is preferred as the alkyl group.

The metallocene complex represented by the general formula (X) includes a silyl ligand [-SiX'₃]. X' in the silyl ligand [-SiX'₃] is a group defined in the same way as X in the general formula (XI) described below, and preferred examples are the same as those of X in the general formula (XI).

In the general formula (XI), X is a group selected from the group consisting of a hydrogen atom, a halogen atom, an alkoxy group, a thiolate group, an amino group, a silyl group, and a monovalent hydrocarbon group having a carbon number of 1 to 20. The halogen atom represented by X may be any of a fluorine atom, a chlorine atom, a bromine atom, and an iodine atom, with a chlorine atom or a bromine atom being preferred.

In the general formula (XI), the alkoxy group represented by X may be any of: aliphatic alkoxy groups such as a methoxy group, an ethoxy group, a propoxy group, an n-butoxy group, an isobutoxy group, a sec-butoxy group, and a tert-butoxy group; and aryloxy groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group, with a 2,6-di-tert-butylphenoxy group being preferred.

In the general formula (XI), the thiolate group represented by X may be any of: aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group, with a 2,4,6-triisopropylthiophenoxy group being preferred.

In the general formula (XI), the amino group represented by X may be any of: aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group, with a bistrimethylsilylamino group being preferred.

In the general formula (XI), the silyl group represented by X may be any of a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group, with a tris(trimethylsilyl)silyl group being preferred.

In the general formula (XI), specific examples of the monovalent hydrocarbon group having a carbon number of 1 to 20 represented by X include: linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; and silicon atom-containing hydrocarbon groups such as a trimethylsilylmethyl group and a bistrimethylsilylmethyl group, with a methyl group, an ethyl group, an isobutyl group, a trimethylsilylmethyl group, and the like being preferred.

In the general formula (XI), X is preferably a bistrimethylsilylamino group or a monovalent hydrocarbon group having a carbon number of 1 to 20.

In the general formula (XI), examples of the non-coordinating anion represented by [B]⁻ include tetravalent boron anions. Specific examples of the tetravalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and tridecahydride-7,8-dicarbaundecaborate, with tetrakis(pentafluorophenyl)borate being preferred.

The metallocene complexes represented by the general formulae (IX) and (X) and the half metallocene cation complex represented by the general formula (XI) may include zero to three, preferably zero or one neutral Lewis base L. Examples of the neutral Lewis base L include tetrahydrofuran, diethyl ether, dimethylaniline, trimethylphosphine, lithium chloride, neutral olefins, and neutral diolefins. In the case where the complex includes a plurality of neutral Lewis bases L, the neutral Lewis bases L may be the same or different.

The metallocene complexes represented by the general formulae (IX) and (X) and the half metallocene cation complex represented by the general formula (XI) may be each present as a monomer or as a dimer or a multimer having two or more monomers.

The metallocene complex represented by the general formula (IX) can be obtained by, for example, subjecting a lanthanoid trishalide, a scandium trishalide, or a yttrium trishalide to reaction in a solvent with a salt of indenyl (for example, a potassium salt or a lithium salt) and a salt of bis(trialkylsilyl) amine (for example, a potassium salt or a lithium salt). The reaction temperature may be set to approximately room temperature, and thus the complex can be produced in mild conditions. The reaction time is not limited, but may be about several hours to several tens of hours. The reaction solvent is not limited, but is preferably a solvent that dissolves a raw material and a product. For example, toluene may be used. A reaction example for obtaining the metallocene complex represented by the general formula (IX) is given below. 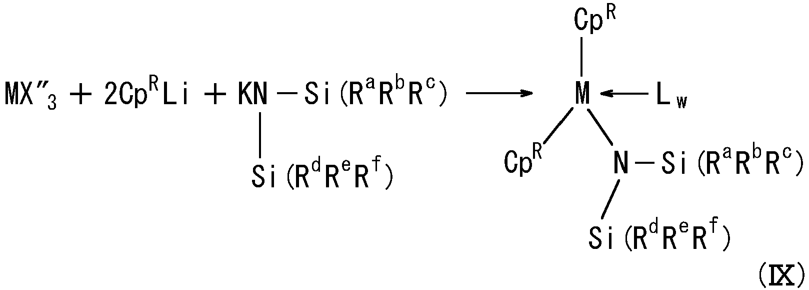 (where X" represents a halide).

The metallocene complex represented by the general formula (X) can be obtained by, for example, subjecting a lanthanoid trishalide, a scandium trishalide, or a yttrium trishalide to reaction in a solvent with a salt of indenyl (for example, a potassium salt or a lithium salt) and a salt of silyl (for example, a potassium salt or a lithium salt). The reaction temperature may be set to approximately room temperature, and thus the complex can be produced in mild conditions. The reaction time is not limited, but may be about several hours to several tens of hours. The reaction solvent is not limited, but is preferably a solvent that dissolves a raw material and a product. For example, toluene may be used. A reaction example for obtaining the metallocene complex represented by the general formula (X) is given below. 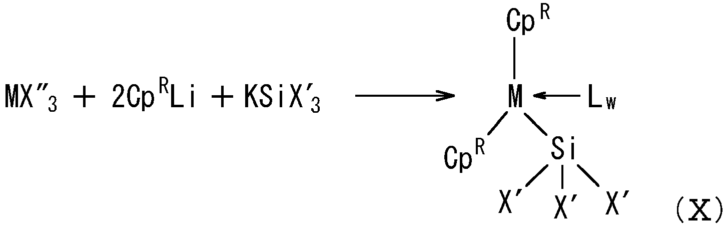 (where X" represents a halide).

The half metallocene cation complex represented by the general formula (XI) can be obtained by, for example, the following reaction:

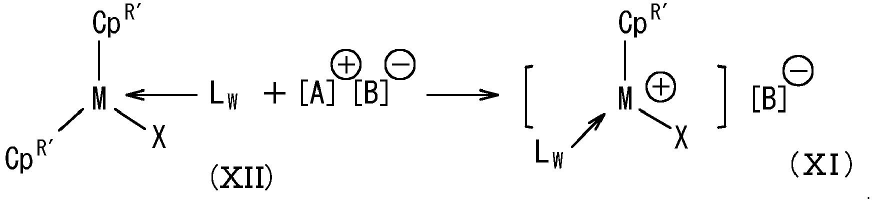

In a compound represented by the general formula (XII), M is a lanthanoid element, scandium, or yttrium, Cp^{R'} are each independently an unsubstituted or substituted cyclopentadienyl, indenyl, or fluorenyl, X is a hydrogen atom, a halogen atom, an alkoxy group, a thiolate group, an amino group, a silyl group, or a monovalent hydrocarbon group having a carbon number of 1 to 20, L is a neutral Lewis base, and w is an integer of 0 to 3. In an ionic compound represented by the general formula [A]⁺[B]⁻, [A]⁺ is a cation, and [B]⁻ is a non-coordinating anion.

Examples of the cation represented by [A]⁺ include a carbonium cation, an oxonium cation, an amine cation, a phosphonium cation, a cycloheptatrienyl cation, and a ferrocenium cation containing a transition metal. Examples of the carbonium cation include trisubstituted carbonium cations such as a triphenylcarbonium cation and a tri(substituted phenyl)carbonium cation. Specific examples of the tri(substituted phenyl)carbonium cation include a tri(methylphenyl)carbonium cation. Examples of the amine cation include: trialkylammonium cations such as a trimethylammonium cation, a triethylammonium cation, a tripropylammonium cation, and a tributylammonium cation; N,N-dialkylanilinium cations such as a N,N-dimethylanilinium cation, a N,N-diethylanilinium cation, and a N,N-2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, a N,N-dialkylanilinium cation or a carbonium cation is preferred, with a N,N-dialkylanilinium cation being particularly preferred.

The ionic compound represented by the general formula [A]⁺[B]⁻ used in the reaction is a compound obtained by combining a non-coordinating anion and a cation selected from the aforementioned non-coordinating anions and cations, with N,N-dimethylanilinium tetrakis(pentafluorophenyl)borate and triphenylcarbonium tetrakis(pentafluorophenyl)borate being preferred. The ionic compound represented by the general formula [A]⁺[B]⁻ is added in an amount of preferably 0.1 times to 10 times mol and more preferably about 1 time mol, with respect to the metallocene complex. When the half metallocene cation complex represented by the general formula (XI) is used in polymerization reaction, the half metallocene cation complex represented by the general formula (XI) may be directly supplied to the polymerization reaction system, or the compound represented by the general formula (XII) and the ionic compound represented by the general formula [A]⁺[B]⁻ used in the reaction may be separately supplied to the polymerization reaction system, to thereby form the half metallocene cation complex represented by the general formula (XI) in the reaction system. The half metallocene cation complex represented by the general formula (XI) may be formed in the reaction system by using the metallocene complex represented by the general formula (IX) or (X) and the ionic compound represented by the general formula [A]⁺[B]⁻ in combination.

The structures of the metallocene complexes represented by the general formulae (IX) and (X) and the half metallocene cation complex represented by the general formula (XI) are preferably determined by X-ray crystallography.

The co-catalyst that can be used in the second polymerization catalyst composition may be freely selected from components used as a co-catalyst in in ordinary metallocene complex-containing polymerization catalyst compositions. Preferred examples of the co-catalyst include aluminoxanes, organic aluminum compounds, and the foregoing ionic compounds. These co-catalysts may be contained alone or in combination of two or more.

The aluminoxane is preferably an alkyl aluminoxane, which may be exemplified by methyl aluminoxane (MAO) and modified methyl aluminoxane. Preferred examples of the modified methyl aluminoxane include MMAO-3A (made by Tosoh Finechem Corporation). The aluminoxane may be contained in the second polymerization catalyst composition in an amount of about 10 to 1,000 and preferably about 100, at an element ratio (Al/M) of the aluminum element Al of the aluminoxane to the central metal element M in the metallocene complex.

A preferred example of the organic aluminum compound is an organic aluminum compound represented by a general formula AlRR'R" (where R and R' are each independently a monovalent hydrocarbon group having a carbon number of 1 to 10, a halogen atom, or a hydrogen atom, and R" is a monovalent hydrocarbon group having a carbon number of 1 to 10). Examples of the halogen atom include a fluorine atom, a chlorine atom, a bromine atom, and an iodine atom, with a chlorine atom being preferred. Examples of the organic aluminum compound include trialkyl aluminum, a dialkyl aluminum chloride, an alkyl aluminum dichloride, and a dialkyl aluminum hydride, with trialkyl aluminum being preferred. Examples of the trialkyl aluminum include triethyl aluminum and triisobutyl aluminum. The organic aluminum compound may be contained in the polymerization catalyst composition in an amount of preferably 1 time to 50 times mol and more preferably about 10 times mol, with respect to the metallocene complex.

In the polymerization catalyst composition, the metallocene complexes represented by the general formulae (IX) and (X) and the half metallocene complex represented by the general formula (XI) may each be combined with an appropriate co-catalyst, to thereby increase the cis-1,4 bond content and the molecular weight of the polymer obtained.

### - Third polymerization catalyst composition -

A third polymerization catalyst composition is, for example, a polymerization catalyst composition containing, as a rare-earth element-containing compound, a metallocene-based composite catalyst represented by the following general formula (XIII):

RₐMX_{b}QY_{b} ... (XIII)

(where R are each independently an unsubstituted or substituted indenyl where R is coordinated to M, M is a lanthanoid element, scandium, or yttrium, X are each independently a hydrocarbon group having a carbon number of 1 to 20 where X is µ-coordinated to M and Q, Q is an element of group 13 in the periodic table, Y are each independently a monovalent hydrocarbon group having a carbon number of 1 to 20 or a hydrogen atom where Y is coordinated to Q, and a and b are 2).

A preferred example of the metallocene-based composite catalyst is a metallocene-based composite catalyst represented by the following general formula (XIV): 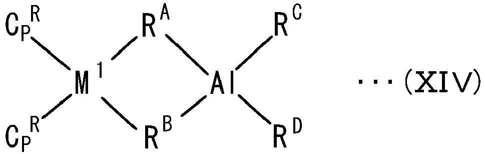 (where M¹ is a lanthanoid element, scandium, or yttrium, Cp^{R} are each independently an unsubstituted or substituted indenyl, R^{A} and R^{B} are each independently a hydrocarbon group having a carbon number of 1 to 20 where R^{A} and R^{B} are µ-coordinated to M¹ and Al, and R^{C} and R^{D} are each independently a hydrocarbon group having a carbon number of 1 to 20 or a hydrogen atom).

By using the metallocene-based polymerization catalyst, a multicomponent copolymer can be produced. By using the metallocene-based composite catalyst, e.g. a catalyst prepared by combining with an aluminum catalyst beforehand, the amount of alkylaluminum used in the synthesis of the multicomponent copolymer can be reduced or the use of alkylaluminum can be omitted. If the conventional catalyst system is used, a large amount of alkylaluminum needs to be used in the synthesis of the multicomponent copolymer. For example, in the case of the conventional catalyst system, alkylaluminum needs to be used in an amount of 10 molar equivalent or more, with respect to the metal catalyst. In the case of the metallocene-based composite catalyst, on the other hand, an excellent catalytic action is exhibited by adding alkylaluminum in an amount of approximately 5 molar equivalent, with respect to the metal catalyst.

In the metallocene-based composite catalyst, the metal M in the general formula (XIII) is a lanthanoid element, scandium, or yttrium. Lanthanoid elements include 15 elements with atomic numbers 57 to 71, any of which may be used. Preferred examples of the metal M include samarium Sm, neodymium Nd, praseodymium Pr, gadolinium Gd, cerium Ce, holmium Ho, scandium Sc, and yttrium Y.

In the general formula (XIII), R are each independently an unsubstituted indenyl or a substituted indenyl where R is coordinated to the metal M. Specific examples of the substituted indenyl include a 1,2,3-trimethylindenyl group, a heptamethylindenyl group, and a 1,2,4,5,6,7-hexamethylindenyl group.

In the general formula (XIII), Q is an element of group 13 in the periodic table. Specific examples of such an element include boron, aluminum, gallium, indium, and thallium.

In the general formula (XIII), X are each independently a monovalent hydrocarbon group having a carbon number of 1 to 20 where X is µ-coordinated to M and Q. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The µ-coordination means a coordination having a crosslinking structure.

In the general formula (XIII), Y are each independently a monovalent hydrocarbon group having a carbon number of 1 to 20 or a hydrogen atom, and Y is coordinated to Q. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

In the general formula (XIV), the metal M¹ is a lanthanoid element, scandium, or yttrium. Lanthanoid elements include 15 elements with atomic numbers 57 to 71, any of which may be used. Preferred examples of the metal M¹ include samarium Sm, neodymium Nd, praseodymium Pr, gadolinium Gd, cerium Ce, holmium Ho, scandium Sc, and yttrium Y.

In the general formula (XIV), Cp^{R} is an unsubstituted indenyl or a substituted indenyl. Cp^{R} containing the indenyl ring as a basic skeleton may be represented by C₉H_{7-X}R_{X} or C₉H_{11-X}R_{X}. Herein, X is an integer of 0 to 7, or 0 to 11. R are preferably each independently a hydrocarbyl group or a metalloid group. The carbon number of the hydrocarbyl group is preferably 1 to 20, more preferably 1 to 10, and further preferably 1 to 8. Specific examples of the hydrocarbyl group include a methyl group, an ethyl group, a phenyl group, and a benzyl group. Examples of the metalloid in the metalloid group include germyl Ge, stannyl Sn, and silyl Si. The metalloid group preferably has a hydrocarbyl group which is the same as the hydrocarbyl group described above. A specific example of the metalloid group is a trimethylsilyl group.

Specific examples of the substituted indenyl include 2-phenylindenyl and 2-methylindenyl. The two Cp^{R} in the formula (XIV) may be the same or different.

In the general formula (XIV), R^{A} and R^{B} are each independently a monovalent hydrocarbon group having a carbon number of 1 to 20, and R^{A} and R^{B} are µ-coordinated to M¹ and Al. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The µ-coordination means a coordination having a crosslinking structure.

In the general formula (XIV), R^{C} and R^{D} are each independently a monovalent hydrocarbon group having a carbon number of 1 to 20 or a hydrogen atom. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

The metallocene-based composite catalyst can be obtained, for example, by allowing a metallocene complex represented by the following general formula (XV) to react with an organic aluminum compound represented by AlR^{K}R^{L}R^{M} in a solvent: 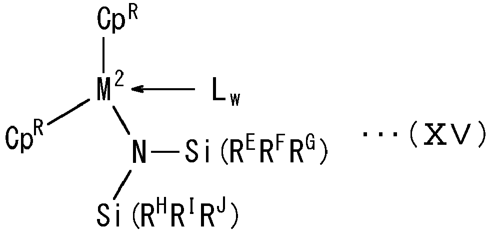 (where M² is a lanthanoid element, scandium, or yttrium, Cp^{R} are each independently an unsubstituted or substituted indenyl, R^{E} to R^{J} are each independently an alkyl group having a carbon number of 1 to 3 or a hydrogen atom, L is a neutral Lewis base, and w is an integer of 0 to 3). Since the reaction temperature may be set to be approximately room temperature, the metallocene-based composite catalyst can be produced under moderate conditions. The reaction time is not limited, but is approximately several hours to several tens of hours. The reaction solvent is not limited, but is preferably a solvent that dissolves a raw material and a product. For example, toluene or hexane may be used. The structure of the metallocene-based composite catalyst is preferably determined by ¹H-NMR or X-ray structural analysis.

In the metallocene complex represented by the general formula (XV), Cp^{R} is an unsubstituted indenyl or a substituted indenyl, and has the same definition as Cp^{R} in the general formula (XIV). In the formula (XV), the metal M² is a lanthanoid element, scandium, or yttrium, and has the same definition as the metal M¹ in the formula (XIV).

The metallocene complex represented by the general formula (XV) contains a silylamide ligand [-N(SiR₃)₂]. R groups (R^{E} to R^{J} groups) contained in the silylamide ligand are each independently an alkyl group having a carbon number of 1 to 3 or a hydrogen atom. At least one of R^{E} to R^{J} is preferably a hydrogen atom. As a result of at least one of R^{E} to R^{J} being a hydrogen atom, the synthesis of the catalyst is easier. The alkyl group is preferably a methyl group.

The metallocene complex represented by the general formula (XV) further contains zero to three neutral Lewis bases L, preferably zero or one neutral Lewis base L. Examples of the neutral Lewis base L include tetrahydrofuran, diethyl ether, dimethylaniline, trimethylphosphine, lithium chloride, neutral olefins, and neutral diolefins. In the case where the complex includes a plurality of neutral Lewis bases L, the neutral Lewis bases L may be the same or different.

The metallocene complex represented by the general formula (XV) may be present in the form of a monomer, or in the form of a dimer or a higher multimer.

The organic aluminum compound used in the generation of the metallocene-based composite catalyst is represented by AlR^{K}R^{L}R^{M}, where R^{K} and R^{L} are each independently a monovalent hydrocarbon group having a carbon number of 1 to 20 or a hydrogen atom, and R^{M} is a monovalent hydrocarbon group having a carbon number of 1 to 20, where R^{M} may be the same as or different from R^{K} or R^{L}. Examples of the monovalent hydrocarbon group having a carbon number of 1 to 20 include a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

Specific examples of the organic aluminum compound include: trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, and trioctyl aluminum; diethyl aluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, and diisooctyl aluminum hydride; and ethyl aluminum dihydride, n-propyl aluminum dihydride, and isobutyl aluminum dihydride. Of these, triethyl aluminum, triisobutyl aluminum, diethyl aluminum hydride, and diisobutyl aluminum hydride are preferable. These organic aluminum compounds may be used alone or in combinations of two or more. The organic aluminum compound used in the generation of the metallocene-based composite catalyst is in an amount of preferably 1 time to 50 times mol, and more preferably approximately 10 times mol, with respect to the metallocene complex.

The third polymerization catalyst composition may contain the metallocene-based composite catalyst and a boron anion, and preferably further contains one or more other components, such as a co-catalyst, contained in ordinary polymerization catalyst compositions containing metallocene-based catalysts. The metallocene-based composite catalyst and boron anion are also collectively referred to as "two-component catalyst". Since the third polymerization catalyst composition further contains a boron anion, as well as the metallocene-based composite catalyst, the content of each monomeric component in the polymer can be freely regulated.

A specific example of the boron anion constituting the two-component catalyst in the third polymerization catalyst composition is a tetravalent boron anion. Examples of the tetravalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (triphenyl, pentafluorophenyl)borate, [tris(pentafluorophenyl), phenyl]borate, and tridecahydride-7,8-dicarbaundecaborate. Of these, tetrakis(pentafluorophenyl)borate is preferable.

The boron anion can be used in the form of an ionic compound in combination with a cation. Examples of the cation include a carbonium cation, an oxonium cation, an amine cation, a phosphonium cation, a cycloheptatrienyl cation, and a ferrocenium cation having a transition metal. Examples of the carbonium cation include trisubstituted carbonium cations such as a triphenylcarbonium cation and a tri(substituted phenyl)carbonium cation. A specific example of the tri(substituted phenyl)carbonium cation is a tri(methylphenyl)carbonium cation. Examples of the amine cation include: trialkylammonium cations such as a trimethylammonium cation, a triethylammonium cation, a tripropylammonium cation, and a tributylammonium cation; N,N-dialkylanilinium cations such as an N,N-dimethylanilinium cation, an N,N-diethylanilinium cation, and an N,N-2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, an N,N-dialkylanilinium cation and a carbonium cation are preferable, and an N,N-dialkylanilinium cation is particularly preferable. Accordingly, the ionic compound is preferably N,N-dimethylanilinium tetrakis(pentafluorophenyl)borate, triphenylcarbonium tetrakis(pentafluorophenyl)borate, or the like. The ionic compound consisting of a boron anion and a cation is added in an amount of preferably 0.1 to 10 times mol and more preferably approximately 1 time mol, with respect to the metallocene-based composite catalyst.

If a boron anion is present in a reaction system for reacting the metallocene complex represented by the general formula (XV) with the organic aluminum compound, the metallocene-based composite catalyst represented by the general formula (XIV) cannot be synthesized. Therefore, in order to prepare the third polymerization catalyst composition, it is necessary to synthesize the metallocene-based composite catalyst beforehand, isolate and purity the metallocene-based composite catalyst, and then combine the metallocene-based composite catalyst with a boron anion.

Preferred examples of the co-catalyst that can be used in the third polymerization catalyst composition include aluminoxane, as well as the organic aluminum compound represented by AlR^{K}R^{L}R^{M}. The aluminoxane is preferably alkylaminoxane, and examples of the alkylaminoxane include methyl aluminoxane (MAO) and modified methyl aluminoxane. The modified methyl aluminoxane is preferably MMAO-3A (made by Tosoh Finechem Corporation), etc. These aluminoxanes may be used alone or in combinations of two or more.

### - Fourth polymerization catalyst composition -

The fourth polymerization catalyst composition needs to contain:
- a rare-earth element compound (component (A2)); and
- a cyclopentadiene skeleton-containing compound selected from a substituted or unsubstituted cyclopentadiene, a substituted or unsubstituted indene (a compound having an indenyl group), and a substituted or unsubstituted fluorene (hereafter also simply referred to as "cyclopentadiene skeleton-containing compound") (component (B2)).

The fourth polymerization catalyst composition may further contain:
- an organic metal compound (component (C2));
- an aluminoxane compound ((component (D2)); and
- a halogen compound (component (E2)).

The fourth polymerization catalyst composition preferably has high solubility in an aliphatic hydrocarbon, and preferably forms a homogeneous solution in the aliphatic hydrocarbon. Examples of the aliphatic hydrocarbon include hexane, cyclohexane, and pentane.

The fourth polymerization catalyst composition preferably does not contain an aromatic hydrocarbon. Examples of the aromatic hydrocarbon include benzene, toluene, and xylene.

Herein, "not containing an aromatic hydrocarbon" means that the proportion of the aromatic hydrocarbon in the polymerization catalyst composition is less than 0.1 mass%.

The component (A2) is, for example, a rare-earth element-containing compound or a reaction product of the rare-earth element-containing compound and a Lewis base, the rare-earth element-containing compound or the reaction product having a metal-nitrogen bond (M-N bond).

The rare-earth element-containing compound is, for example, a compound containing scandium, yttrium, or a lanthanoid element composed of any of the elements with atomic numbers 57 to 71. Specific examples of the lanthanoid element include lanthanum, cerium, praseodymium, neodymium, promethium, samarium, europium, gadolinium, terbium, dysprosium, holmium, erbium, thulium, ytterbium, and lutetium.

Examples of the Lewis base include tetrahydrofuran, diethyl ether, dimethylaniline, trimethylphosphine, lithium chloride, neutral olefins, and neutral diolefins.

The rare-earth element-containing compound or the reaction product of the rare-earth element-containing compound and the Lewis base preferably does not have a bond of the rare-earth element and carbon. In the case where the rare-earth element-containing compound or the reaction product does not have a rare-earth element-carbon bond, the compound is stable and easy to handle.

These components (A2) may be used alone or in combination of two or more.

The component (A2) is preferably a compound represented by the following general formula (XVI):

M-(AQ¹)(AQ²)(AQ³) ... (XVI)

(where M is scandium, yttrium, or a lanthanoid element, AQ¹, AQ², and AQ³ are functional groups which may be the same or different, A is nitrogen, oxygen, or sulfur, and the component (A2) has at least one M-A bond). Specific examples of the lanthanoid element include lanthanum, cerium, praseodymium, neodymium, promethium, samarium, europium, gadolinium, terbium, dysprosium, holmium, erbium, thulium, ytterbium, and lutetium. The compound is a component capable of improving the catalytic activity in the reaction system, shortening the reaction time, and increasing the reaction temperature.

In particular, M in the general formula (XVI) is preferably gadolinium, from the viewpoint of improving the catalytic activity and the reaction controllability.

In the case where A in the general formula (XVI) is nitrogen, the functional groups represented by AQ¹, AQ², and AQ³ (i.e. NQ¹, NQ², and NQ³) may be, for example, an amino group. In this case, the component (A2) has three M-N bonds.

Examples of the amino group include: aliphatic amino groups such as a dimethylamino group, a diethylamino group, and a diisopropylamino group; arylamino groups such as a phenylamino group, a 2,6-di-tert-butylphenylamino group, a 2,6-diisopropylphenylamino group, a 2,6-dineopentylphenylamino group, a 2-tert-butyl-6-isopropylphenylamino group, a 2-tert-butyl-6-neopentylphenylamino group, a 2-isopropyl-6-neopentylphenylamino group, and a 2,4,6-tri-tert-butylphenylamino group; and bistrialkylsilylamino groups such as a bistrimethylsilylamino group. In particular, a bistrimethyllsilylamino group is preferable from the viewpoint of the solubility in an aliphatic hydrocarbon and an aromatic hydrocarbon. These amino groups may be used alone or in combination of two or more.

With this structure, the component (A2) is a compound having three M-N bonds, so that the bonds are chemically equivalent to one another. Such a compound has a stable structure and is easy to handle.

Moreover, with this structure, the catalytic activity in the reaction system can be further improved. Consequently, the reaction time can be further shortened, and the reaction temperature can be further increased.

In the case where A in the general formula (XVI) is oxygen, the rare-earth element-containing compound represented by the general formula (XVI) (i.e. M-(OQ¹)(OQ²)(OQ³)) is not limited, but is, for example, a rare earth alcoholate represented by the following general formula (XVII):

(RO)₃M ... (XVII)

or a rare earth carboxylate represented by the following general formula (XVIII):

(R-CO₂)₃M ... (XVIII).

In the general formulae (XVII) and (XVIII), R may be the same or different, and are an alkyl group having a carbon number of 1 to 10.

Since the component (A2) preferably does not have the bond between the rare-earth element and carbon, the compound (XVII) or (XVIII) is preferably used.

In the case where A in the general formula (XVI) is sulfur, the rare-earth element-containing compound represented by the general formula (XVI) (i.e. M-(SQ¹)(SQ²)(SQ³)) is not limited, but is, for example, a rare earth alkylthiolate represented by the following general formula (XIX):

(RS)₃M ... (XIX)

or a compound represented by the following general formula (XX):

(R-CS₂)₃M ... (XX).

In the general formulae (XIX) and (XX), R may be the same or different, and are an alkyl group having a carbon number of 1 to 10.

Since the component (A2) preferably does not have the bond between the rare-earth element and carbon, the compound (XIX) or (XX) is preferably used.

The component (B2) is a compound selected from a substituted or unsubstituted cyclopentadiene, a substituted or unsubstituted indene, and a substituted or unsubstituted fluorene.

These components (B2) may be used alone or in combination of two or more.

Examples of the substituted or unsubstituted cyclopentadiene include cyclopentadiene, pentamethylcyclopentadiene, tetramethylcyclopentadiene, isopropylcyclopentadiene, and trimethylsilyl-tetramethylcyclopentadiene.

Examples of the substituted or unsubstituted indene include indene, 2-phenyl-1H-indene, 3-benzyl-1H-indene, 3-methyl-2-phenyl-1H-indene, 3-benzyl-2-phenyl-1H-indene, 1-benzyl-1H-indene, 1-methyl-3-dimethylbenzylsilyl-indene, and 1,3-(t-BuMe₂Si)₂-indene. In particular, 3-benzyl-1H-indene and 1-benzyl-1H-indene are preferable from the viewpoint of reducing the molecular weight distribution.

Examples of the substituted or unsubstituted fluorene include fluorene, trimethyllsilylfluorene, and isopropylfluorene.

The organic metal compound (component (C2)) is, for example, an organic metal compound represented by the following general formula (XXI):

YR⁴ₐR⁵_{b}R⁶_{c} ... (XXI)

(where Y is a metal element selected from the group consisting of elements of groups 1, 2, 12, and 13 in the periodic table, R⁴ and R⁵ are each a monovalent hydrocarbon group having a carbon number of 1 to 10 or a hydrogen atom, R⁶ is a monovalent hydrocarbon group having a carbon number of 1 to 10, R⁴, R⁵, and R⁶ may be the same or different, a is 1 and b and c are 0 in the case where Y is a metal element of group 1, a and b are 1 and c is 0 in the case where Y is a metal element of group 2 or 12 and a, b, and c are 1 in the case where Y is a metal element of group 13).

As a result of the polymerization catalyst composition further containing the component (C2), the polymerization activity can be enhanced.

At least one of R⁴, R⁵ and R⁶ is preferably different in the general formula (XXI), from the viewpoint of improving the catalytic activity.

In detail, the component (C2) is preferably an organic aluminum compound represented by the following general formula (XXII):

AlR4aR⁵_{b}R⁶_{c} ... (XXII)

(where R⁴ and R⁵ are each a monovalent hydrocarbon group having a carbon number of 1 to 10 or a hydrogen atom, R⁶ is a monovalent hydrocarbon group having a carbon number of 1 to 10, and R⁴, R⁵, and R⁶ may be the same or different).

Examples of the organic aluminum compound include: trimethyl aluminum, triethyl aluminum, tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, and trioctyl aluminum; diethyl aluminum hydride, di-n-propyl aluminum hydride, di-n-butyl aluminum hydride, diisobutyl aluminum hydride, dihexyl aluminum hydride, diisohexyl aluminum hydride, dioctyl aluminum hydride, and diisooctyl aluminum hydride; and ethyl aluminum dihydride, n-propyl aluminum dihydride, and isobutyl aluminum dihydride. In particular, triethyl aluminum, triisobutyl aluminum, diethyl aluminum hydride, and diisobutyl aluminum hydride are preferable, and diisobutyl aluminum hydride is more preferable.

These organic aluminum compounds may be used alone or in combination of two or more.

The aluminoxane compound (component (D2)) is a compound obtained by causing an organic aluminum compound to come into contact with a condensation agent.

As a result of using the component (D2), the catalytic activity in the polymerization reaction system can be further improved. Consequently, the reaction time can be further shortened, and the reaction temperature can be further increased.

Examples of the organic aluminum compound include trialkyl aluminum such as trimethyl aluminum, triethyl aluminum, and triisobutyl aluminum, and mixtures thereof. In particular, trimethyl aluminum and a mixture of trimethyl aluminum and tributyl aluminum are preferable.

The condensation agent is, for example, water.

The component (D2) is, for example, an aluminoxane represented by the following formula (XXIII):

-(Al(R⁷)O)ₙ- ... (XXIII)

(where R⁷ is a hydrocarbon group having a carbon number of 1 to 10, part of the hydrocarbon group may be substituted by a halogen and/or an alkoxy group, R⁷ may be the same or different among repeating units, and n is 5 or more).

The molecular structure of the aluminoxane may be linear or cyclic.

In the formula (XXIII), n is preferably 10 or more.

Regarding R⁷ in the formula (XXIII), examples of the hydrocarbon group include a methyl group, an ethyl group, a propyl group, and an isobutyl group. In particular, a methyl group is preferable. These hydrocarbon groups may be used alone or in combination of two or more. Regarding R⁷ in the formula (XXIII), the hydrocarbon group is preferably a combination of a methyl group and an isobutyl group.

The aluminoxane preferably has high solubility in an aliphatic hydrocarbon, and preferably has low solubility in an aromatic hydrocarbon. For example, an aluminoxane commercially available as a hexane solution is preferable.

Examples of the aliphatic hydrocarbon include hexane and cyclohexane.

The component (D2) may be a modified aluminoxane (hereafter also referred to as "TMAO") represented by the following formula (XXIV):

-(Al(CH₃)ₓ(i-C₄H₉)_{y}O)ₘ- ... (XXIV)

(where x + y is 1, and m is 5 or more). An example of TMAO is product name "TMAO341" made by Tosoh Finechem Corporation.

The component (D2) may be a modified aluminoxane (hereafter also referred to as "MMAO") represented by the following formula (XXV):

-(Al(CH₃)_{0.7}(i-C₄H₉)_{0.3}O)ₖ- ... (XXV)

(where k is 5 or more). An example of MMAO is product name "MMAO-3A" made by Tosoh Finechem Corporation.

The component (D2) may be a modified aluminoxane (hereafter also referred to as "PMAO") represented by the following formula (XXVI):

-[(CH₃)AlO]ᵢ- ... (XXVI)

(where i is 5 or more). An example of PMAO is product name "PMAO-211" made by Tosoh Finechem Corporation.

From the viewpoint of enhancing the catalytic activity improving effect, the component (D2) is preferably MMAO or TMAO from among MMAO, TMAO, and PMAO. In particular, from the viewpoint of further enhancing the catalytic activity improving effect, the component (D2) is further preferably TMAO.

The halogen compound (component (E2)) is a at least one compound selected from the group consisting of a halogen-containing compound (hereafter also referred to as "component (E2-1)") which is a Lewis acid, a complex compound of a metal halide and a Lewis base (hereafter also referred to as "component (E2-2)"), and an organic compound containing an active halogen (hereafter also referred to as "component (E2-3)").

Such a compound reacts with the component (A2), i.e. the rare-earth element-containing compound or the reaction product of the rare-earth element-containing compound and the Lewis base where the rare-earth element-containing compound or the reaction product has an M-A bond, thereby generating a cationic transition metal compound, a halogenated transition metal compound, and/or a transition metal compound in a state in which electrons are insufficient at the transition metal center.

As a result of the fourth polymerization catalyst composition further containing the component (E2), the cis-1,4 bond content of the conjugated diene unit can be further increased.

The component (E2-1) is, for example, a halogen-containing compound containing an element of group 3, group 4, group 5, group 6, group 8, group 13, group 14, or group 15 in the periodic table. In particular, an aluminum halide or an organometallic halide is preferable.

Examples of the halogen-containing compound which is a Lewis acid include titanium tetrachloride, tungsten hexachloride, tri(pentafluorophenyl)borate, methyl aluminum dibromide, methyl aluminum dichloride, ethyl aluminum dibromide, ethyl aluminum dichloride, butyl aluminum dibromide, butyl aluminum dichloride, dimethyl aluminum bromide, dimethyl aluminum chloride, diethyl aluminum bromide, diethyl aluminum chloride, dibutyl aluminum bromide, dibutyl aluminum chloride, methyl aluminum sesquibromide, methyl aluminum sesquichloride, ethyl aluminum sesquibromide, ethyl aluminum sesquichloride, aluminum tribromide, tri(pentafluorophenyl) aluminum, dibutyltin dichloride, tin tetrachloride, phosphorus trichloride, phosphorus pentachloride, antimony trichloride, and antimony pentachloride. In particular, ethyl aluminum dichloride, ethyl aluminum dibromide, diethyl aluminum chloride, diethyl aluminum bromide, ethyl aluminum sesquichloride, and ethyl aluminum sesquibromide are preferable.

As the halogen, chlorine or bromine is preferable.

The halogen-containing compound (component (E2-1)) which is a Lewis acid may be used alone or in combination of two or more.

Examples of the metal halide used in the component (E2-2) include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, and gold bromide. In particular, magnesium chloride, calcium chloride, barium chloride, zinc chloride, manganese chloride, and copper chloride are preferable, and magnesium chloride, zinc chloride, manganese chloride, and copper chloride are more preferable.

The Lewis base used in the component (E2-2) is preferably a phosphorus compound, a carbonyl compound, a nitrogen compound, an ether compound, or an alcohol.

Examples include tributyl phosphate, tri-2-ethylhexyl phosphate, triphenyl phosphate, tricresyl phosphate, triethylphosphine, tributylphosphine, triphenylphosphine, diethylphosphino ethane, diphenylphosphino ethane, acetylacetone, benzoylacetone, propionitrileacetone, valerylacetone, ethyl acetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, versatic acid, triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, and lauryl alcohol. In particular, tri-2-ethylhexyl phosphate, tricresyl phosphate, acetylacetone, 2-ethylhexane acid, versatic acid, 2-ethylhexyl alcohol, 1-decanol, and lauryl alcohol are preferable.

The Lewis base is brought to reaction at a ratio of 0.01 mol to 30 mol, preferably 0.5 mol to 10 mol, per 1 mol of the metal halide. By using a reaction product with the Lewis base, metal remaining in the polymer can be reduced.

These complex compounds of a metal halide and a Lewis base (component (E2-2)) may be used alone or in combination of two or more.

The component (E3-3) is, for example, benzyl chloride.

The compounding ratio of each component of the fourth polymerization catalyst composition will be described below.

From the viewpoint of obtaining the catalytic activity sufficiently, the molar ratio of the compounding amount of the component (B2) (cyclopentadiene skeleton-containing compound) to the compounding amount of the component (A2) is preferably more than 0, more preferably 0.5 or more, and particularly preferably 1 or more. From the viewpoint of suppressing a decrease of the catalytic activity, the molar ratio is preferably 3 or less, more preferably 2.5 or less, and particularly preferably 2.2 or less.

From the viewpoint of improving the catalytic activity in the reaction system, the molar ratio of the compounding amount of the component (C2) (organic metal compound) to the compounding amount of the component (A2) is preferably 1 or more, and more preferably 5 or more. From the viewpoint of suppressing a decrease of the catalytic activity, the molar ratio is preferably 50 or less, and more preferably 30 or less. Specifically, the molar ratio is preferably approximately 10.

From the viewpoint of improving the catalytic activity in the reaction system, the molar ratio of aminium in the component (D2) (aluminoxane) to the rare-earth element in the component (A2) is preferably 10 or more, and more preferably 100 or more. From the viewpoint of suppressing a decrease of the catalytic activity, the molar ratio is preferably 1000 or less, and more preferably 800 or less.

From the viewpoint of improving the catalytic activity, the molar ratio of the compounding amount of the component (E2) (halogen compound) to the compounding amount of the component (A2) is preferably 0 or more, more preferably 0.5 or more, and particularly preferably 1.0 or more. From the viewpoint of maintaining the solubility of the component (E2) and suppressing a decrease of the catalytic activity, the molar ratio is preferably 20 or less, and more preferably 10 or less.

With such a range, the effect of increasing the cis-1,4 bond content or the 1,4 bond content of the conjugated diene unit can be enhanced.

The fourth polymerization catalyst composition preferably does not contain an ionic compound consisting of a non-coordinating anion (for example, tetravalent boron anion) and a cation (for example, carbonium cation, oxonium cation, ammonium cation, phosphonium cation, cycloheptatrienyl cation, or ferrocenium cation having transition metal). The ionic compound has high solubility in an aromatic hydrocarbon, and has low solubility in a hydrocarbon. Therefore, if the polymerization catalyst composition does not contain the ionic compound, the conjugated dienepolymer can be produced with lower environmental load and lower production cost.

Herein, "not containing an ionic compound" means that the proportion of the ionic compound in the polymerization catalyst composition is less than 0.01 mass%.

The coupling step is a step of performing reaction (coupling reaction) to modify at least part (for example, a terminal end) of a polymer chain of the multicomponent copolymer obtained in the polymerization step.

In the coupling step, the coupling reaction is preferably performed when the polymerization reaction has reached 100%.

The coupling agent used in the coupling reaction is not limited, and may be selected as appropriate depending on the intended use. Examples include: tin-containing compounds such as bis(maleic acid-1-octadecyl)dioctyltin (IV); isocyanate compounds such as 4,4'-diphenylmethane diisocyanate; and alkoxysilane compounds such as glycidylpropyltrimethoxysilane. These coupling agents may be used alone or in combination of two or more.

Of these, bis(maleic acid-1-octadecyl)dioctyltin (IV) is preferable from the viewpoint of reaction efficiency and low gel formation.

The coupling reaction thus performed can increase the number-average molecular weight (Mn).

The cleaning step is a step of cleaning the multicomponent copolymer obtained in the polymerization step. The medium used in the cleaning is not limited, and may be selected as appropriate depending on the intended use. Examples include methanol, ethanol, and isopropanol. An acid (such as hydrochloric acid, sulfuric acid, nitric acid) may be added to these solvents, when using a Lewis acid-derived catalyst as the polymerization catalyst. The amount of the acid added is preferably 15 mol% or less with respect to the solvent. If the amount of the acid is more than 15 mol%, the acid remains in the copolymer, which may adversely affect the reaction during kneading and vulcanization.

The cleaning step can favorably reduce the catalyst residue in the copolymer.

In the rubber composition according to the present disclosure, the content of the multicomponent copolymer (a1) in the rubber component (a) is preferably in a range of 10 mass% to 100 mass%, more preferably in a range of 20 mass% to 100 mass%, and further preferably in a range of 30 mass% to 100 mass%. If the content of the multicomponent copolymer (a1) in the rubber component (a) is 10 mass% or more, the effect by the multicomponent copolymer (a1) is sufficiently exerted, and the breaking resistance of the rubber composition is further improved.

Rubber components in the rubber component (a) other than the multicomponent copolymer (a1) are not limited, and may be selected as appropriate depending on the intended use. Examples include natural rubber (NR), isoprene rubber (IR), butadiene rubber (BR), acrylonitrile-butadiene rubber (NBR), chloroprene rubber, ethylene-propylene rubber (EPM), ethylene-propylene-diene rubber (EPDM), polysulfide rubber, silicone rubber, fluororubber, and urethane rubber, which may be used alone or in combination of two or more.

The rubber composition according to the present disclosure contains the tackifier (b). As a result of the rubber composition containing the tackifier (b), the processability of the rubber composition is improved. In more detail, as a result of the rubber composition containing the tackifier (b) together with the multicomponent copolymer (a1), high breaking resistance attributable to the multicomponent copolymer (a1) is maintained, and also the rubber composition has excellent tackiness when adhered to other members during formation of a tire or the like. This improves the productivity of the tire or the like.

As the tackifier (b), various natural resins and synthetic resins may be used. Specifically, rosin-based resins, terpene-based resins, petroleum-based resins, phenol-based resins, coal-based resins, xylene-based resins, etc. are preferable. These tackifiers (b) may be used alone or in combination of two or more.

In the natural resins, examples of the rosin-based resins include gum rosin, tall oil rosin, wood rosin, hydrogenated rosin, disproportionated rosin, polymerized rosin, and glycerin or pentaerythritol ester of modified rosin.

In the natural resins, examples of the terpene-based resins include terpene resins such as α-pinene-based, β-pinene-based, and dipentene-based, aromatic modified terpene resin, terpenephenol resin, and hydrogenated terpene resin.

Of these natural resins, polymerized rosin, terpene phenol resin, and hydrogenated terpene resin are preferable from the viewpoint of the breaking resistance of the formulated rubber composition.

In the synthetic resins, the petroleum-based resins are obtained by polymerizing, using a Friedel-Crafts catalyst, a cracked distillate fraction in a mixture state containing unsaturated hydrocarbon such as olefin or diolefin produced as a by-product together with a petrochemical basic raw material such as ethylene or propylene by, for example, pyrolysis of naphtha in the petrochemical industry. Examples of the petroleum-based resins include an aliphatic petroleum resin (hereafter also referred to as "Cs-based resin") obtained by (co)polymerizing a C₅ fraction obtained by pyrolysis of naphtha, an aromatic petroleum resin (hereafter also referred to as "C₉-based resin") obtained by (co)polymerizing a C₉ fraction obtained by pyrolysis of naphtha, a copolymer petroleum resin (hereafter also referred to as "C₅/C₉-based resin") obtained by copolymerizing the C₅ fraction and the C₉ fraction, a cycloaliphatic compound-based petroleum resin such as hydrogenated or dicyclopentadiene-based, and a styrene-based resin such as a polymer of styrene or substituted styrene, or a copolymer of styrene and another monomer.

The C₅ fraction obtained by pyrolysis of naphtha typically includes an olefinic hydrocarbon such as 1-pentene, 2-pentene, 2-methyl-1-butene, 2-methyl-2-butene, or 3-methyl-1-butene, a diolefinic hydrocarbon such as 2-methyl-1,3-butadiene, 1,2-pentadiene, 1,3-pentadiene, or 3-methyl-1,2-butadiene, or the like. The aromatic petroleum resin obtained (co)polymerizing the C₉ fraction is a resin obtained by polymerization of an aromatic compound having a carbon number of 9 with vinyltoluene and indene as main monomers. Specific examples of the C₉ fraction obtained by pyrolysis of naphtha include styrene homologs such as α-methylstyrene, β-methylstyrene, and γ -methylstyrene, and indene homologs such as indene and coumarone. Examples of product names include PETROSIN made by Mitsui Petrochemical Industries, Ltd., PETLITE made by Mikuni Chemical Industry Co., Ltd., NEO POLYMER made by Nippon Petrochemicals Co., Ltd., and PETCOL made by Tosoh Corporation.

Furthermore, in the present disclosure, a modified petroleum resin obtained by modification of the petroleum resin containing the C₉ fraction is preferably used. Examples of the modified petroleum resin include a C₉-based petroleum resin modified by an unsaturated cycloaliphatic compound, a C₉-based petroleum resin modified by a compound having a hydroxyl group, and a C₉-based petroleum resin modified by an unsaturated carboxylic acid compound.

Preferable examples of the unsaturated cycloaliphatic compound include cyclopentadiene and methylcyclopentadiene. As the unsaturated cycloaliphatic compound, a Diels-Alder reaction product of alkylcyclopentadiene is also preferable. Examples of the Diels-Alder reaction product of alkylcyclopentadiene include dicyclopentadiene, cyclopentadiene/methylcyclopentadiene codimers, and tricyclopentadiene. As the unsaturated cycloaliphatic compound, dicyclopentadiene is particularly preferable. The dicyclopentadiene-modified C₉-based petroleum resin can be obtained by thermal polymerization or the like in the presence of both of dicyclopentadiene and the C₉ fraction. The dicyclopentadiene-modified C₉-based petroleum resin is, for example, NEO POLYMER 130S (made by Nippon Petrochemicals Co., Ltd.).

Examples of the compound having a hydroxyl group include an alcohol compound and a phenol compound. Specific examples of the alcohol compound include alcohol compounds having a double bond such as aryl alcohol and 2-butene-1,4-diol. Examples of the phenol compound include phenol, and alkylphenols such as cresol, xylenol, p-tert-butylphenol, p-octylphenol, and p-nonylphenol. These compounds having a hydroxyl group may be used alone or in combination of two or more. The C₉-based petroleum resin having a hydroxyl group can be produced by, for example, a method of thermally polarizing a (meth)acrylic acid alkyl ester or the like together with a petroleum fraction to introduce an ester group into petroleum resin and then reducing the ester group, or a method of causing a double bond to remain in petroleum resin or introducing the double bond into the petroleum resin and then hydrating the double bond. Although the C₉-based petroleum resin having a hydroxyl group can be obtained by various methods as mentioned above, it is preferable to use a phenol-modified petroleum resin or the like from the viewpoint of performance and production. The phenol-modified petroleum resin is obtained by cationic polymerization of the C₉ fraction in the presence of phenol, is easy to modify, and is inexpensive. The phenol-modified C₉-based petroleum resin is, for example, NEO POLYMER E-130 (made by Nippon Petrochemicals Co., Ltd.).

The C₉-based petroleum resin modified by an unsaturated carboxylic acid compound may be a C₉-based petroleum resin modified by an ethylenic unsaturated carboxylic acid. Typical examples of the ethylenic unsaturated carboxylic acid include (anhydrous) maleic acid, fumaric acid, itaconic acid, tetrahydro (anhydrous) phthalic acid, (meth)acrylic acid, and citraconic acid. The unsaturated carboxylic acid-modified C₉-based petroleum resin can be obtained by thermally polymerizing the C₉-based petroleum resin and the ethylene-based unsaturated carboxylic acid. In the present disclosure, a maleic acid-modified C₉-based petroleum resin is preferable. The unsaturated carboxylic acid-modified C₉-based petroleum resin is, for example, NEO POLYMER 160 (made by Nippon Petrochemicals Co., Ltd.).

In the present disclosure, a copolymer resin of the C₅ fraction and the C₉ fraction obtained by pyrolysis of naphtha may be preferably used. The C₉ fraction is not limited, but is preferably a C₉ fraction obtained by pyrolysis of naphtha. Specific examples include TS30, TS30-DL, TS35, and TS35-DL of the STRUKTOL series made by Schill & Seilacher GmbH.

In the synthetic resins, examples of the phenol-based resins include an alkylphenol formaldehyde-based resin and a rosin-modified derivative thereof, an alkylphenol acetylene-based resin, a modified alkylphenol resin, and a terpenephenol resin. Specific examples include HITANOL 1502 (made by Hitachi Chemical Industry Co., Ltd.) which is a novolac type alkylphenol resin, and KORESIN (made by BASF A.G.) which is a p-tert-butylphenol acetylene resin.

In the synthetic resins, an example of the coal-based resins is a coumarone indene resin. In the synthetic resins, an example of the xylene-based resins is a xylene formaldehyde resin. Polybutene is also usable as a tackifying resin. Of these synthetic resins, a copolymer resin of the C₅ fraction and the C₉ fraction, an aromatic petroleum resin obtained by (co)polymerizing the C₉ fraction, a phenol-based resin, and a coumarone indene resin are preferable, from the viewpoint of the breaking resistance of the formulated rubber composition.

In the rubber composition according to the present disclosure, the SP value of the tackifier (b) is preferably 4 (MPa)^{1/2} or less, more preferably 3 (MPa)^{1/2} or less, further preferably 2 (MPa)^{1/2} or less, even more preferably 1 (MPa)^{1/2} or less, and particularly preferably 0.5 (MPa)^{1/2} or less. If the SP value of the tackifier (b) is 4 (MPa)^{1/2} or less, the tackifier (b) is prevented from existing locally and forming fracture nuclei in the rubber composition, so that the breaking resistance of the rubber composition is further improved. No lower limit is placed on the SP value of the tackifier (b), but the SP value of the tackifier (b) is preferably 0.01 (MPa)^{1/2} or more.

Herein, the SP value of the tackifier (b) refers to a solubility parameter calculated using Hansen's formula. More specifically, the SP value of the tackifier (b) refers to a value calculated from dipole interaction energy between molecules and energy by hydrogen bond from among three parameters of Hansen.

In the rubber composition according to the present disclosure, the weight-average molecular weight (Mw) of the tackifier (b) is preferably 2000 or less, and more preferably 1500 or less. If the weight-average molecular weight (Mw) of the tackifier (b) is 2000 or less, the tackifier (b) is prevented from existing locally and forming fracture nuclei in the rubber composition, so that the breaking resistance of the rubber composition is further improved. No lower limit is placed on the weight-average molecular weight (Mw) of the tackifier (b), but the weight-average molecular weight (Mw) of the tackifier (b) is preferably 400 or more.

Herein, the weight-average molecular weight (Mw) of the tackifier (b) is a value measured using gel permeation chromatography (GPC) in terms of polystyrene.

The softening point of the tackifier (b) (measurement method: ASTM E28-58-T) is preferably 200°C or less, more preferably in a range of 80°C to 150°C, and further preferably in a range of 90°C to 120°C. If the softening point is 200°C or less, the temperature dependence of the hysteresis loss property is low, and the processability is further improved.

In the rubber composition according to the present disclosure, the content of the tackifier (b) is preferably 0.1 parts to 100 parts by mass, more preferably 15 parts to 80 parts by mass, and further preferably 25 parts to 60 parts by mass, with respect to 100 parts by mass of the rubber component (a). If the content of the tackifier (b) is 0.1 parts by mass or more with respect to 100 parts by mass of the rubber component (a), the processability (tackiness) of the rubber composition is further improved. If the content of the tackifier (b) is 100 parts by mass or less with respect to 100 parts by mass of the rubber component (a), the breaking resistance of the rubber composition is further improved.

The rubber composition according to the present disclosure preferably contains at least one selected from a softener (c) and a liquid rubber (d). As a result of the rubber composition containing the softener (c) and/or the liquid rubber (d), the processability of the rubber composition is further improved.

Examples of the softener (c) include mineral-derived oil, petroleum-derived aromatic oil, paraffinic oil, naphthenic oil, and palm oil derived from natural products. Of these, a mineral-derived softener and a petroleum-derived softener are preferable from the viewpoint of the breaking resistance of the rubber composition.

As the softener (c), a mixture of naphthenic oil and asphalt or paraffinic oil is particularly preferable.

In the mixture of naphthenic oil and asphalt, the naphthenic oil may be hydrogenated naphthenic oil. The hydrogenated naphthenic oil can be obtained by hydrorefining naphthenic oil by a high-temperature high-pressure hydrorefining technique beforehand. The asphalt preferably has an asphaltene component of 5 mass% or less, from the viewpoint of the compatibility with the rubber component (a) and the effect as a softener. The asphaltene component is quantified by composition analysis through measurement in accordance with the JPI (Japan Petroleum Institute) method.

In the present disclosure, the liquid rubber (d) is a polymer that is liquid at room temperature (23°C) and has a weight-average molecular weight (Mw) of 45000 or less, and is not included in the rubber component (a). The liquid rubber (d) is liquid at room temperature, and has an effect of improving the processability of the rubber composition as with the softener (c). The weight-average molecular weight (Mw) of the liquid rubber (d) is preferably 500 or more.

Herein, the weight-average molecular weight (Mw) of the liquid rubber (d) is a value measured using gel permeation chromatography (GPC) in terms of polystyrene.

Specific examples of the liquid rubber (d) include polyisoprene, polybutadiene, a styrene-butadiene copolymer, a styrene-isoprene copolymer, and a styrene-butadiene-isoprene copolymer (SIBR). One or more of these liquid rubbers (d) may be used.

In the rubber composition according to the present disclosure, the SP value of the softener (c) and the liquid rubber (d) is preferably 4 (MPa)^{1/2} or less, more preferably 3 (MPa)^{1/2} or less, further preferably 2 (MPa)^{1/2} or less, even more preferably 1 (MPa)^{1/2} or less, and particularly preferably 0.5 (MPa)^{1/2} or less. If the SP value of the softener (c) and the liquid rubber (d) is 4 (MPa)^{1/2} or less, the softener (c) and the liquid rubber (d) are prevented from existing locally and forming fracture nuclei in the rubber composition, so that the breaking resistance of the rubber composition is further improved. No lower limit is placed on the SP value of the softener (c) and the liquid rubber (d), but the SP value of the softener (c) and the liquid rubber (d) is preferably 0.01 (MPa)^{1/2} or more.

Herein, the SP value of the softener (c) and the liquid rubber (d) refers to a solubility parameter calculated using Hansen's formula. More specifically, the SP value of the softener (c) and the liquid rubber (d) refers to a value calculated from dipole interaction energy between molecules and energy by hydrogen bond from among three parameters of Hansen.

In the rubber composition according to the present disclosure, the weight-average molecular weight (Mw) of the softener (c) is preferably 2000 or less, and more preferably 1500 or less. If the weight-average molecular weight (Mw) of the softener (c) is 2000 or less, the softener (c) is prevented from existing locally and forming fracture nuclei in the rubber composition, so that the breaking resistance of the rubber composition is further improved. No lower limit is placed on the weight-average molecular weight (Mw) of the softener (c), but the weight-average molecular weight (Mw) of the softener (c) is preferably 400 or more.

Herein, the weight-average molecular weight (Mw) of the softener (c) is a value measured using gel permeation chromatography (GPC) in terms of polystyrene.

The rubber composition according to the present disclosure preferably contains at least one selected from the softener (c) and the liquid rubber (d) in an amount of 0.1 parts to 150 parts by mass, more preferably in an amount of 1 part to 110 parts by mass, further preferably in an amount of 1 part to 100 parts by mass, particularly preferably in an amount of 5 parts to 50 parts by mass, and also preferably in an amount of 10 parts to 150 parts by mass, with respect to 100 parts by mass of the rubber component (a). If the total content of the softener (c) and the liquid rubber (d) is 0.1 parts by mass or more with respect to 100 parts by mass of the rubber component (a), the processability of the rubber composition is further improved. If the total content of the softener (c) and the liquid rubber (d) is 150 parts by mass or less, the breaking resistance of the rubber composition is further improved.

The total content of the tackifier (b) and the softener (c) is preferably 35 parts by mass or more, and is preferably 150 parts by mass or less, more preferably 100 parts by mass or less, and further preferably 80 parts by mass or less, with respect to 100 parts by mass of the rubber component (a). If the total content of the tackifier (b) and the softener (c) is 35 parts by mass or more with respect to 100 parts by mass of the rubber component (a), the processability, the breaking resistance, and the crack resistance can all be attained.

The rubber composition according to the present disclosure preferably contains a filler. If the rubber composition contains a filler, the reinforcing property of the rubber composition can be improved. Examples of the filler include, without being limited thereto, carbon black, silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate, with the use of carbon black being preferred. These fillers may be used alone or in combination of two or more.

The compounding amount of the filler is not limited, and may be selected as appropriate depending on the intended use. The compounding amount of the filler is preferably 10 parts to 100 parts by mass, more preferably 20 parts to 80 parts by mass, and particularly preferably 30 parts to 60 parts by mass, with respect to 100 parts by mass of the rubber component (a). As a result of the compounding amount of the filler being 10 parts by mass or more, the reinforcing property improving effect by blending the filler can be sufficiently achieved. As a result of the compounding amount of the filler being 100 mass or less, favorable processability can be maintained.

The rubber composition according to the present disclosure preferably contains a crosslinking agent. The crosslinking agent is not limited, and may be selected as appropriate depending on the intended use. Examples include a sulfur-based crosslinking agent, an organic peroxide-based crosslinking agent, an inorganic crosslinking agent, a polyamine crosslinking agent, a resin crosslinking agent, a sulfur compound-based crosslinking agent, and an oxime-nitrosamine-based crosslinking agent, with the sulfur-based crosslinking agent (vulcanizing agent) being more preferred for the rubber composition for use in tires.

The content of the crosslinking agent is not limited, may be selected as appropriate depending on the intended use. The content of the crosslinking agent is preferably 0.1 parts to 20 parts by mass with respect to 100 parts by mass of the rubber component (a).

In the case of using the vulcanizing agent, a vulcanization accelerator may be additionally used in combination. Examples of the vulcanization accelerator include a guanidine-based compound, an aldehyde-amine-based compound, an aldehyde-ammonia-based compound, a thiazole-based compound, a sulfenamide-based compound, a thiourea-based compound, a thiuram-based compound, a dithiocarbamate-based compound, and a xanthate-based compound.

The rubber composition according to the present disclosure may optionally contain, depending on the intended use, a vulcanization aid, a colorant, a flame retarder, a lubricant, a foaming agent, a plasticizer, a processing aid, an antioxidant, an age resistor, an antiscorching agent, an anti-ultraviolet agent, an antistatic agent, a coloration inhibitor, and other publicly-known compounding agents.

The rubber composition according to the present disclosure is usable in various rubber products such as the below-described tire, rubber crawler, seismic isolation device, and hose.

### <Tire>

A tire according to the present disclosure is produced using the foregoing rubber composition. Since the tire according to the present disclosure is produced using the foregoing rubber composition, the tire according to the present disclosure has excellent durability and excellent productivity.

The rubber composition according to the present disclosure may be used in any part of the tire with no limitation, which may be selected as appropriate depending on the intended use. Examples include a tread, a base tread, a sidewall, a side reinforcing rubber, and a bead filler.

The tire may be produced by a conventional method. The method may include, for example, sequentially applying and stacking, onto a tire molding drum, members generally used in tire production, such as a carcass layer, a belt layer, and a tread layer formed of an unvulcanized rubber composition and/or cords, removing the drum therefrom to provide a green tire, and then vulcanizing the green tire by heating using an ordinary method, to thereby manufacture a desired tire (for example, a pneumatic tire).

### <Rubber crawler>

A rubber crawler according to the present disclosure is produced using the foregoing rubber composition. Since the rubber crawler according to the present disclosure is produced using the foregoing rubber composition, the rubber crawler according to the present disclosure has excellent durability and excellent productivity.

In an embodiment, the rubber crawler includes steel cords, an intermediate rubber layer covering the steel cords, a core located on the intermediate rubber layer, and a body rubber layer surrounding the intermediate rubber layer and the core, and further includes a plurality of lugs on the footprint side of the body rubber layer. The rubber composition may be used in any part of the rubber crawler according to the present disclosure, but is preferably used in the body rubber layer, in particular the lugs, for excellent breaking resistance.

### <Seismic isolation device>

The seismic isolation device according to the present disclosure is produced using the foregoing rubber composition. Since the seismic isolation device according to the present disclosure is produced using the foregoing rubber composition, the seismic isolation device according to the present disclosure has excellent durability and excellent productivity.

In an embodiment, the seismic isolation device includes a laminated body in which a soft layer and a hard layer are alternately laminated, and a plug pressed into a hollow portion formed at the center of the laminated body. In an embodiment, the foregoing rubber composition may be used in at least one of the soft layer and the plug.

### <Hose>

A hose according to the present disclosure is produced using the foregoing rubber composition. Since the hose according to the present disclosure is produced using the foregoing rubber composition, the hose according to the present disclosure has excellent durability and excellent productivity.

In an embodiment, the hose includes an inner surface rubber layer (inner tube rubber) located on the radially inner side and an outer surface rubber layer located on the radially outer side, and optionally includes a reinforcement layer located between the inner surface rubber layer and the outer surface rubber layer. In an embodiment, the foregoing rubber composition may be used in at least one of the inner surface rubber layer and the outer surface rubber layer. The foregoing rubber composition may also be used in a hose composed of a single rubber layer.

### EXAMPLES

The presently disclosed techniques will be described in more detail below by way of examples, although the present disclosure is not limited to the examples below.

### <Copolymer analysis methods>

The following methods were used to measure the number-average molecular weight (Mn), weight-average molecular weight (Mw), molecular weight distribution (Mw/Mn), ethylene unit content, styrene unit content, butadiene unit content, melting point, endothermic peak energy, glass transition temperature, and degree of crystallinity of each synthesized copolymer and determine the main chain structure.

### (1) Number-average molecular weight (Mn), weight-average molecular weight (Mw), and molecular weight distribution (Mw/Mn)

The number-average molecular weight (Mn), weight-average molecular weight (Mw), and molecular weight distribution (Mw/Mn) of the copolymer in terms of polystyrene were determined by gel permeation chromatography [GPC: HLC-8121GPC/HT made by Tosoh Corporation, column: two GMH_{HR}-H(S)HT columns made by Tosoh Corporation, detector: differential refractometer (RI)] with respect to monodisperse polystyrene. The measurement temperature was 40°C.

### (2) Ethylene unit content, styrene unit content, butadiene unit content

The contents (mol%) of an ethylene unit, a styrene unit, and a butadiene unit in the copolymer were determined from the integral ratio of each peak of a ¹H-NMR spectrum (100°C, d-tetrachloroethane standard: 6 ppm).

### (3) Melting point (Tₘ)

The melting point of the copolymer was measured in accordance with JIS K 7121-1987, using a differential scanning calorimeter (DSC, "DSCQ2000" made by TA Instruments Japan Inc.).

### (4) Endothermic peak energy

The endothermic peak energy from 0°C to 120°C when increasing the temperature from -150°C to 150°C at a heating rate of 10°C/min (i.e. during first run) was measured in accordance with JIS K 7121-1987, using a differential scanning calorimeter (DSC, "DSCQ2000" made by TA Instruments Japan Inc.).

### (5) Glass transition temperature (Tg)

The glass transition temperature (Tg) of the copolymer was measured in accordance with JIS K 7121-1987, using a differential scanning calorimeter (DSC, "DSCQ2000" made by TA Instruments Japan Inc.).

### (6) Degree of crystallinity

The crystal melting energy of polyethylene of 100% crystal component and the melting peak energy of the obtained copolymer were measured, and the degree of crystallinity was calculated from the energy ratio between the polyethylene and the copolymer. Here, the melting peak energy was measured using a differential scanning calorimeter (DSC, "DSCQ2000" made by TA Instruments Japan Inc.).

### (7) Determination of main chain structure

A ¹³C-NMR spectrum was measured for the synthesized copolymer.

### <Terpolymer synthetic method>

160 g of styrene and 600 mL of toluene were added into a sufficiently dried 1000 mL pressure-resistant stainless steel reactor.

In a glove box in a nitrogen atmosphere, 0.25 mmol of mono(bis(1,3-tert-butyldimethylsilyl)indenyl)bis(bis(dimethylsilyl)amide gadolinium complex {1,3-[(t-Bu)Me₂Si]₂C₉H₅Gd[N(SiHMe₂)₂]₂}, 0.275 mmol of dimethylanilinium tetrakis(pentafluorophenyl)borate [Me₂NHPhB(C₆F₅)₄], and 1.1 mmol of diisobutyl aluminum hydride were added into a glass container and dissolved in 40 mL of toluene, to yield a catalyst solution.

The catalyst solution was added into the pressure-resistant stainless steel reactor, and heated to 70°C.

Next, ethylene was added into the pressure-resistant stainless steel reactor at a pressure of 1.5 MPa, further 80 mL of a toluene solution containing 20 g of 1,3-butadiene was added into the pressure-resistant stainless steel reactor for 8 hr, and copolymerization was performed at 70°C for a total of 8.5 hr.

Next, 1 ml of an isopropanol solution of 5 mass% of 2,2'-methylene-bis(4-ethyl-6-t-butylphenol) (NS-5) was added into the pressure-resistant stainless steel reactor, to terminate the reaction.

Following this, a large amount of methanol was used to separate a copolymer, which was then vacuum dried at 50°C to obtain a terpolymer.

The number-average molecular weight (Mn), weight-average molecular weight (Mw), molecular weight distribution (Mw/Mn), ethylene unit content, styrene unit content, butadiene unit content, melting point (Tₘ), endothermic peak energy, glass transition temperature (Tg), and degree of crystallinity of the obtained terpolymer were measured by the foregoing methods. The results are listed in Table 1.

Moreover, the main chain structure of the obtained terpolymer was determined by the foregoing method. Since no peak was observed from 10 ppm to 24 ppm in the ¹³C-NMR spectrum chart, it was determined that the main chain of the synthesized terpolymer consists only of an acyclic structure.

### <Bipolymer synthetic method>

2,000 g of a toluene solution containing 120 g (2.22 mol) of 1,3-butadiene was added into a sufficiently dried 4 L stainless steel reactor, and then ethylene was introduced at 1.72 MPa. Meanwhile, in a glove box in a nitrogen atmosphere, 28.5 µmol of bis(2-phenylindenyl)gadolinium bis(dimethylsilylamide) [(2-PhC₉H₆)₂GdN(SiHMe₂)₂], 28.5 µmol of dimethylanilinium tetrakis(pentafluorophenyl)borate [Me₂NHPhB(C₆F₅)₄], and 2.00 mmol of diisobutyl aluminum hydride were added into a glass container and dissolved in 40 ml of toluene, to yield a catalyst solution. After this, the catalyst solution was taken out of the glove box, the catalyst solution in an amount of 25.0 µmol in terms of gadolinium was added to the monomer solution, and polymerization was performed at 50°C for 90 min. After the polymerization, 5 ml of an isopropanol solution of 5 mass% of 2,2'-methylene-bis(4-ethyl-6-t-butylphenol) (NS-5) was added to terminate the reaction. Further, a large amount of methanol was added to separate a copolymer, which was then vacuum dried at 70°C to obtain a bipolymer.

The number-average molecular weight (Mn), weight-average molecular weight (Mw), molecular weight distribution (Mw/Mn), ethylene unit content, butadiene unit content, melting point (Tₘ), endothermic peak energy, glass transition temperature (Tg), and degree of crystallinity of the obtained bipolymer were measured by the foregoing methods. The results are listed in Table 1.

**[Table 1]**

| | | Terpolymer | Bipolymer |
|---|---|---|---|
| Number-average molecular weight (Mn) | ×10³ | 163 | 121 |
| Weight-average molecular weight (Mw) | ×10³ | 399 | 473 |
| Molecular weight distribution (Mw/Mn) | - | 2.4 | 3.88 |
| Butadiene unit content | mol% | 8 | 57 |
| Ethylene unit content | mol% | 85 | 43 |
| Styrene unit content | mol% | 7 | 0 |
| Melting point | °C | 63 | 120 |
| Endothermic peak energy | J/g | 43.1 | 48.4 |
| Glass transition temperature | °C | -28 | -103 |
| Degree of crystallinity | % | 14.7 | 16.5 |

### <Preparation and evaluation of rubber composition>

Rubber compositions were produced using a typical Banbury mixer in accordance with the formulations listed in Table 2. The breaking resistance and processability of each obtained rubber composition were evaluated by the following methods. The results are listed in Table 2.

### (8) Breaking resistance

A vulcanized rubber obtained by vulcanizing the rubber composition at 145°C for 33 min was subjected to a tensile test in accordance with JIS K6251:2010. The breaking strength (Tb) was measured at room temperature (23°C), and represented by an index with the Tb of Comparative Example 3 being 100. A larger index value indicates greater breaking strength (Tb) and better breaking resistance.

### (9) Processability (tackiness)

The rubber composition is made into a sheet of 2 mm in thickness at a roll temperature of 90°C. The rubber composition made into a sheet is then left for 1 hr, cut out to a width of 10 mm, and wound on a ring of 50 ϕmm. The wound rubber and a rubber sheet having the same composition as the rubber are pressure-bonded, and the tackiness (tack strength) is measured by PICMA TACK TESTER made by Toyo Seiki Seisaku-sho, Ltd. The tackiness is represented by an index with Comparative Example 3 being 100. The force in the pressure bonding is 4.9 N, the pressure bonding time is 30 sec, and the tension rate is 30 mm/min. A larger index value indicates higher tackiness and good processability.

**[Table 2]**

| | | | Comparative Example 1 | Comparative Example 2 | Comparative Example 3 | Comparative Example 4 | Example 1 | Example 2 |
|---|---|---|---|---|---|---|---|---|
| Formulation | Terpolymer *1 | Parts by mass | - | - | 100 | - | 100 | 100 |
| | Bipolymer *2 | | - | - | - | 100 | - | - |
| | SBR *3 | | 100 | 100 | - | - | - | - |
| | Carbon black *4 | | 50 | 50 | 50 | 50 | 50 | 50 |
| | Age resistor 6PPD *5 | | 1 | 1 | 1 | 1 | 1 | 1 |
| | Stearic acid | | 2 | 2 | 2 | 2 | 2 | 2 |
| | Zinc oxide | | 2.5 | 2.5 | 2.5 | 2.5 | 2.5 | 2.5 |
| | Wax *6 | | 2 | 2 | 2 | 2 | 2 | 2 |
| | Softener *7 | | 10 | 10 | 10 | 10 | 10 | 10 |
| | Tackifier 1 *8 | | - | 40 | - | - | - | - |
| | Tackifier 2 *9 | | - | - | - | - | 40 | - |
| | Tackifier 3 *10 | | - | - | - | - | - | 40 |
| | Vulcanization accelerator MBTS *11 | | 1 | 1 | 1 | 1 | 1 | 1 |
| | Vulcanization accelerator TBBS *12 | | 0.5 | 0.5 | 0.5 | 0.5 | 0.5 | 0.5 |
| | Vulcanization accelerator DPG *13 | | 1 | 1 | 1 | 1 | 1 | 1 |
| | Sulfur | | 1.5 | 1.5 | 1.5 | 1.5 | 1.5 | 1.5 |
| Evaluation result | Breaking resistance | Index | 87 | 46 | 100 | 70 | 105 | 107 |
| | Processability (tackiness) | Index | 10763 | 25688 | 100 | 75 | 4575 | 3075 |

| | | | | | | | | |
|---|---|---|---|---|---|---|---|---|
| Comparative Example 2 is a prophetical example. *1 Terpolymer: terpolymer synthesized by the foregoing method *2 Bipolymer: bipolymer synthesized by the foregoing method *3 SBR: styrene-butadiene copolymer rubber, product name "#0202" made by JSR Corporation *4 Carbon black: HAF carbon black, product name "#70" made by Asahi Carbon Co., Ltd. *5 Age resistor 6PPD: N-(1,3-dimethylbutyl)-N'-phenyl-p-phenyleneamine, product name "NOCRAC 6C^{®}" made by Ouchi Shinko Chemical Industrial Co., Ltd. (NOCRAC 6C is a registered trademark in Japan, other countries, or both) *6 Wax: product name "SUNTIGHT^{®}" made by Seiko-Chemical Co., Ltd. (SUNTIGHT is a registered trademark in Japan, other countries, or both) *7 Softener: mixture of naphthenic oil and asphalt, product name "DIANA PROCESS OIL NH-70S" made by Idemitsu Kosan Co., Ltd., SP value = 0.14 (MPa)^{1/2}, Mn = 217, Mw = 678, Mw/Mn = 3.13 *8 Tackifier 1: alkylphenol formaldehyde resin, product name "R7510PJ" made by SI Group-Ribecourt SAS, SP value = 5.37 (MPa)^{1/2}, Mn = 573, Mw = 1618, Mw/Mn = 2.826 *9 Tackifier 2: aliphatic hydrocarbon resin, product name "HIREZ G-100X" made by Mitsui Petrochemical Industries, Ltd., SP value = 0.14 (MPa)^{1/2}, Mn = 1245, Mw = 3244, Mw/Mn = 2.605 *10 Tackifier 3: aliphatic petroleum resin, product name "HIREZ T500X" made by Mitsui Chemicals, Inc., SP value = 0.14 (MPa)^{1/2}, Mn = 865, Mw = 2592, Mw/Mn = 2.996 *11 Vulcanization accelerator MBTS: di-2-benzothiazolyl disulfide, product name "SANCELER DM" made by Sanshin Chemical Industry Co., Ltd. *12 Vulcanization accelerator TBBS: N-tert-butyl-2-benzothiazolyl sulfeneamide, product name "SANCELER NS" made by Sanshin Chemical Industry Co., Ltd. *13 Vulcanization accelerator DPG: 1,3-diphenylguanidine, product name "SANCELER D" made by Sanshin Chemical Industry Co., Ltd. | | | | | | | | |

It can be understood from Table 2 that the rubber compositions of Examples according to the present disclosure were excellent in breaking resistance and processability.

### INDUSTRIAL APPLICABILITY

The rubber composition according to the present disclosure can be used in various rubber products such as tires, rubber crawlers, seismic isolation devices, and hoses.

## Claims

1. A rubber product which is selected from the group consisting of a tire, a rubber crawler, a seismic isolation device and a hose, and is produced using a rubber composition comprising:
a rubber component (a) containing a multicomponent copolymer (a1) that contains a conjugated diene unit, a non-conjugated olefin unit, and an aromatic vinyl unit; and
a tackifier (b).

2. The rubber product according to claim 1, wherein in the multicomponent copolymer (a1), a content of the conjugated diene unit is 1 mol% to 50 mol%, a content of the non-conjugated olefin unit is 40 mol% to 97 mol%, and a content of the aromatic vinyl unit is 2 mol% to 35 mol%.

3. The rubber product according to claim 1 or 2, wherein a content of the tackifier (b) in the rubber composition is 0.1 parts to 100 parts by mass with respect to 100 parts by mass of the rubber component (a).

4. The rubber product according to any one of claims 1 to 3, wherein an SP value of the tackifier (b) is 4 (MPa)^{1/2} or less.

5. The rubber product according to any one of claims 1 to 4, wherein a weight-average molecular weight (Mw) of the tackifier (b) is 2000 or less.

6. The rubber product according to any one of claims 1 to 5, wherein the rubber composition further comprises
at least one selected from a softener (c) and a liquid rubber (d), and
a content of the at least one selected from the softener (c) and the liquid rubber (d) in the rubber composition is 10 parts to 150 parts by mass with respect to 100 parts by mass of the rubber component (a).

7. The rubber product according to any one of claims 1 to 6, wherein a melting point of the multicomponent copolymer (a1) measured by a differential scanning calorimeter (DSC) is 30°C to 130°C.

8. The rubber product according to any one of claims 1 to 7, wherein an endothermic peak energy of the multicomponent copolymer (a1) from 0°C to 120°C measured by a differential scanning calorimeter (DSC) is 10 J/g to 150 J/g.

9. The rubber product according to any one of claims 1 to 8, wherein a glass transition temperature of the multicomponent copolymer (a1) measured by a differential scanning calorimeter (DSC) is 0°C or less.

10. The rubber product according to any one of claims 1 to 9, wherein a degree of crystallinity of the multicomponent copolymer (a1) is 0.5% to 50%.

11. The rubber product according to any one of claims 1 to 10, wherein a main chain of the multicomponent copolymer (a1) consists only of an acyclic structure.

12. The rubber product according to any one of claims 1 to 11, wherein in the multicomponent copolymer (a1), the non-conjugated olefin unit is an acyclic non-conjugated olefin unit.

13. The rubber product according to claim 12, wherein the acyclic non-conjugated olefin unit consists only of an ethylene unit.

14. The rubber product according to any one of claims 1 to 13, wherein in the multicomponent copolymer (a1), the aromatic vinyl unit contains a styrene unit.

15. The rubber product according to any one of claims 1 to 14, wherein in the multicomponent copolymer (a1), the conjugated diene unit contains one or both of a 1,3-butadiene unit and an isoprene unit.

16. The rubber product according to any one of claims 1 to 15, wherein a content of the multicomponent copolymer (a1) in the rubber component (a) is 10 mass% to 100 mass%.

17. The rubber product according to any one of claims 1 to 16, which is the tire.

18. The rubber product according to any one of claims 1 to 16, which is the rubber crawler.

19. The rubber product according to any one of claims 1 to 16, which is the seismic isolation device.

20. The rubber product according to any one of claims 1 to 16, which is the hose.

## Patentansprüche

1. Kautschukerzeugnis, das ausgewählt ist aus der Gruppe, die aus einem Reifen, einer Gummi-Raupenkette, einer seismischen Isolierungseinrichtung und einem Schlauch besteht, und unter Verwendung einer Kautschukzusammensetzung hergestellt ist, die Folgendes umfasst:
eine Kautschukkomponente (a), die ein Mehrkomponenten-Copolymer (a1) enthält, das eine konjugierte Dien-Einheit, eine nicht-konjugierte Olefin-Einheit und eine aromatische Vinyl-Einheit enthält; und
einen Klebrigmacher (b).

2. Kautschukerzeugnis nach Anspruch 1, wobei in dem Mehrkomponenten-Copolymer (a1) ein Gehalt der konjugierten Dien-Einheit 1 Mol-% bis 50 Mol-% beträgt, ein Gehalt der nicht-konjugierten Olefin-Einheit 40 Mol-% bis 97 Mol-% beträgt, und ein Gehalt der aromatischen Vinyl-Einheit 2 Mol-% bis 35 Mol-% beträgt.

3. Kautschukerzeugnis nach Anspruch 1 oder 2, wobei ein Gehalt des Klebrigmachers (b) in der Kautschukzusammensetzung 0,1 Massenteile bis 100 Massenteile in Bezug auf 100 Massenteile der Kautschukkomponente (a) beträgt.

4. Kautschukerzeugnis nach einem der Ansprüche 1 bis 3, wobei ein LP-Wert des Klebrigmachers (b) 4 (MPa)^{1/2} oder weniger beträgt.

5. Kautschukerzeugnis nach einem der Ansprüche 1 bis 4, wobei ein gewichtsgemitteltes Molekulargewicht (Mw) des Klebrigmachers (b) 2 000 oder weniger beträgt.

6. Kautschukerzeugnis nach einem der Ansprüche 1 bis 5, wobei die Kautschukzusammensetzung ferner Folgendes umfasst:
mindestens eines, das ausgewählt ist aus einem Weichmacher (c) und einem flüssigen Kautschuk (d), und
ein Gehalt des mindestens einen, das ausgewählt ist aus dem Weichmacher (c) und dem flüssigen Kautschuk (d), in der Kautschukzusammensetzung beträgt 10 Massenteile bis 150 Massenteile in Bezug auf 100 Massenteile der Kautschukkomponente (a).

7. Kautschukerzeugnis nach einem der Ansprüche 1 bis 6, wobei ein Schmelzpunkt des Mehrkomponenten-Copolymers (a1), gemessen durch ein dynamisches Differenzkalorimeter (DDK), 30 °C bis 130 °C beträgt.

8. Kautschukerzeugnis nach einem der Ansprüche 1 bis 7, wobei eine endotherme Spitzenenergie des Mehrkomponenten-Copolymers (a1) bei 0 °C bis 120 °C, gemessen durch ein dynamisches Differenzkalorimeter (DDK), 10 J/g bis 150 J/g beträgt.

9. Kautschukerzeugnis nach einem der Ansprüche 1 bis 8, wobei eine Glasübergangstemperatur des Mehrkomponenten-Copolymers (a1), gemessen durch ein dynamisches Differenzkalorimeter (DDK), 0 °C oder weniger beträgt.

10. Kautschukerzeugnis nach einem der Ansprüche 1 bis 9, wobei ein Kristallinitätsgrad des Mehrkomponenten-Copolymers (a1) 0,5 % bis 50 % beträgt.

11. Kautschukerzeugnis nach einem der Ansprüche 1 bis 10, wobei eine Hauptkette des Mehrkomponenten-Copolymers (a1) nur aus einer acyclischen Struktur besteht.

12. Kautschukerzeugnis nach einem der Ansprüche 1 bis 11, wobei in dem Mehrkomponenten-Copolymer (a1) die nicht-konjugierte Olefin-Einheit eine acyclische nicht-konjugierte Olefin-Einheit ist.

13. Kautschukerzeugnis nach Anspruch 12, wobei die acyclische nicht-konjugierte Olefin-Einheit nur aus einer Ethylen-Einheit besteht.

14. Kautschukerzeugnis nach einem der Ansprüche 1 bis 13, wobei in dem Mehrkomponenten-Copolymer (a1) die aromatische Vinyl-Einheit eine Styrol-Einheit enthält.

15. Kautschukerzeugnis nach einem der Ansprüche 1 bis 14, wobei in dem Mehrkomponenten-Copolymer (a1) die konjugierte Dien-Einheit eine oder beide von einer 1,3-Butadien-Einheit und einer Isopren-Einheit enthält.

16. Kautschukerzeugnis nach einem der Ansprüche 1 bis 15, wobei ein Gehalt des Mehrkomponenten-Copolymers (a1) in der Kautschukkomponente (a) 10 Masse-% bis 100 Masse-% beträgt.

17. Kautschukerzeugnis nach einem der Ansprüche 1 bis 16, das der Reifen ist.

18. Kautschukerzeugnis nach einem der Ansprüche 1 bis 16, das die Gummi-Raupenkette ist.

19. Kautschukerzeugnis nach einem der Ansprüche 1 bis 16, das die seismische Isolierungseinrichtung ist.

20. Kautschukerzeugnis nach einem der Ansprüche 1 bis 16, das der Schlauch ist.

## Revendications

1. Produit en caoutchouc, qui est sélectionné dans le groupe constitué d'un pneumatique, d'une chenille en caoutchouc, d'un dispositif d'isolation sismique et d'un tuyau souple, et qui est produit en utilisant une composition de caoutchouc comprenant :
un composant de caoutchouc (a) contenant un copolymère multicomposant (a1) qui contient une unité de diène conjugué, une unité d'oléfine non conjuguée et une unité de vinyle aromatique ; et
un agent donnant du collant (b).

2. Produit en caoutchouc selon la revendication 1, dans lequel, dans le copolymère multicomposant (a1), une teneur en unité de diène conjugué est de 1 % mol à 50 % mol, une teneur en unité d'oléfine non conjuguée est de 40 % mol à 97 % mol, et une teneur en unité de vinyle aromatique est de 2 % mol à 35 % mol.

3. Produit en caoutchouc selon la revendication 1 ou 2, dans lequel une teneur en agent donnant du collant (b) dans la composition de caoutchouc est comprise entre 0,1 parties et 100 parties en masse par rapport à 100 parties en masse du composant de caoutchouc (a).

4. Produit en caoutchouc selon l'une quelconque des revendications 1 à 3, dans lequel une valeur SP de l'agent donnant du collant (b) est 4 (MPa)^{1/2} ou moins.

5. Produit en caoutchouc selon l'une quelconque des revendications 1 à 4, dans lequel un poids moléculaire moyen en poids (Mw) de l'agent donnant du collant (b) est 2 000 ou moins.

6. Produit en caoutchouc selon l'une quelconque des revendications 1 à 5, dans lequel la composition de caoutchouc comprend en outre :
au moins un composant sélectionné parmi un adoucissant (c) et un caoutchouc liquide (d), et
une teneur en ledit au moins un composant sélectionné parmi l'adoucissant (c) et le caoutchouc liquide (d) dans la composition de caoutchouc est de 10 parties à 150 parties en masse par rapport à 100 parties en masse du composant de caoutchouc (a).

7. Produit en caoutchouc selon l'une quelconque des revendications 1 à 6, dans lequel un point de fusion du copolymère multicomposant (a1) mesuré par un calorimètre différentiel à balayage (DSC) est compris entre 30 °C et 130 °C.

8. Produit en caoutchouc selon l'une quelconque des revendications 1 à 7, dans lequel une énergie de pic endothermique du copolymère multicomposant (a1) à 0 °C jusqu'à 120 °C, mesurée par un calorimètre différentiel à balayage (DSC), est comprise entre 10 J/g et 150 J/g.

9. Produit en caoutchouc selon l'une quelconque des revendications 1 à 8, dans lequel une température de transition vitreuse du copolymère multicomposant (a1) mesurée par un calorimètre différentiel à balayage (DSC) est 0 °C ou moins.

10. Produit en caoutchouc selon l'une quelconque des revendications 1 à 9, dans lequel un degré de cristallinité du copolymère multicomposant (a1) est de 0,5 % à 50 %.

11. Produit en caoutchouc selon l'une quelconque des revendications 1 à 10, dans lequel une chaîne principale du copolymère multicomposant (a1) est constituée uniquement par une structure acyclique.

12. Produit en caoutchoucs selon l'une quelconque des revendications 1 à 11, dans lequel, dans le copolymère multicomposant (a1), l'unité d'oléfine non conjuguée est une unité d'oléfine non conjuguée acyclique.

13. Produit en caoutchouc selon la revendication 12, dans lequel l'unité d'oléfine non conjuguée acyclique est constituée uniquement par une unité d'éthylène.

14. Produit en caoutchoucs selon l'une quelconque des revendications 1 à 13, dans lequel, dans le copolymère multicomposant (a1), l'unité de vinyle aromatique contient une unité de styrène.

15. Produit en caoutchouc selon l'une quelconque des revendications 1 à 14, dans lequel, dans le copolymère multicomposant (a1), l'unité de diène conjugué contient l'une ou les deux d'une unité de 1,3-butadiène et d'une unité d'isoprène.

16. Produit en caoutchouc selon l'une quelconque des revendications 1 à 15, dans lequel une teneur en copolymère multicomposant (a1) dans le composant de caoutchouc (a) est de 10 % en masse à 100 % en masse.

17. Produit en caoutchouc selon l'une quelconque des revendications 1 à 16, qui est le pneumatique.

18. Produit en caoutchouc selon l'une quelconque des revendications 1 à 16, qui est la chenille en caoutchouc.

19. Produit en caoutchouc selon l'une quelconque des revendications 1 à 16, qui est le dispositif d'isolation sismique.

20. Produit en caoutchouc selon l'une quelconque des revendications 1 à 16, qui est le tuyau souple.
